# EUROPEAN PATENT APPLICATION

(11) **EP 2 007 143 A1**
(43) Date of publication of application: **24.12.2008**
(21) Application number: 07739646.3
(22) Date of filing: 26.03.2007
(51) Int. Cl.: H04N 7/173, H04N 5/44, H04N 5/76

(54) **REPRODUCING SYSTEM AND REPRODUCING METHOD, PORTABLE TYPE REPRODUCING DEVICE, RECORDING DEVICE, AND COMPUTER PROGRAM**

(30) Priority: 24.03.2006 JP 2006082659
(71) Applicant: Pioneer Corporation, Tokyo 153-8654 (JP)
(72) Inventor: TAHARA, Kazushi, Saitama;3502288 (JP)
(74) Representative: Viering, Jentschura & Partner
(86) International application number: PCT/JP2007/056208
(87) International publication number: WO 2007/111299

(57) **Abstract**

A reproducing system (1) is provided with: a mobile reproducing apparatus (100) which is provided with a receiving device (101, 102) for receiving content through a broadcast line; a transmitting device (103) for transmitting control information through a communication line (300); a receiving device (103) for receiving the content through the communication line; a reproducing device (106) for reproducing the content; and a controlling device (114) for switching between a reproduction of the content received through the broadcast line and a reproduction of the content received through the communication line; and a recording apparatus (200) which is provided with: a receiving device (203) for receiving the control information through the communication line; a receiving device (201, 202) for receiving the content data through the broadcast line; a recording device (207) for recording the content data on the basis of the control information; and a transmitting device (203) for transmitting the content data through the communication line.

## Description

### Technical Field

The present invention relates to a reproducing system and reproducing method in which communication is performed between a mobile reproducing apparatus and a recording apparatus connected mainly through a mobile wireless network, in which information is transferred from the recording apparatus to the mobile reproducing apparatus and in which the information can be reproduced on the mobile reproducing apparatus, as well as the mobile reproducing apparatus and the recording apparatus used for the reproducing system, and a computer program which realizes the above.

### Background Art

Currently, a navigation apparatus, in particular, a navigation apparatus for a vehicle is widely spread, and its development proceeds day by day. The navigation apparatus uses map data stored in a CD-ROM, DVD-ROM, or HDD (hard disk), to thereby display the current position of an object of navigation such as a vehicle, on a display apparatus such as a display, and provide various functions, such as route guidance. As a method of recognizing the current position of the object, mainly it is general to use one or combine both of the following two navigations: self-contained navigation for positioning the current position of the object using only information from a sensor that measures various parameters, such as a speed and direction, provided for the object of the navigation, and navigation by a navigation aid system using a GPS (Global Positioning System) for receiving positioning data transmitted from a plurality of satellites and poisoning the current position.

On many such navigation apparatuses, TV programs can be watched by receiving airwaves. Moreover, not only the navigation apparatus but also a mobile terminal, such as a mobile phone, a PDA (Personal Digital Assistance), and a mobile personal computer, on which TV programs can be watched are also becoming popular.

However, for example, in case of the navigation apparatus, most of them are designed such that TV programs cannot be watched, for security, while the movable body (e.g. a vehicle, human, and the like) equipped with the navigation apparatus is travelling or moving. As described above, in order to avoid such a disadvantage that TV programs cannot be watched, a patent document 1 discloses a technology of providing the navigation apparatus with a function for recording a TV program. By this, it is possible to record a TV program broadcasted while the movable body is travelling or moving and to watch the recorded TV program when the movable body is not travelling or moving.

On the other hand, since the mobile terminal, such as a mobile phone, a PDA, a navigation apparatus, and a mobile personal computer, is a terminal moving with the movable body, the status for receiving airwaves changes every moment. Thus, for example, it is undeniable that video quality and audio quality deteriorate, compared to the case that TV programs are watched at home. In particular, if the movable body enters a tunnel or the like, the airwaves are blocked, which makes TV programs impossible to be watched. In order to avoid such a disadvantage that TV programs cannot be watched, a patent document 2 discloses a broadcast program recording system in which an instruction to record a TV program is sent from the navigation apparatus to a recorder located in a distant place (e.g. home, etc.), to thereby record the TV program using the recorder. By this, it is possible to watch the TV program that cannot be watched because the airwaves cannot be received, later at home.
Patent document 1: Japanese Patent Publication No. 2914694
Patent document 1: Japanese Patent Application Laid Open NO. 2002-300502

### Disclosure of Invention

### Subject to be Solved by the Invention

However, every technology has such a technical problem that a fellow passenger except a driver cannot watch TV programs continuously. For example, even if the navigation apparatus has the function for recording TV programs, if it enters a tunnel or the like in which the airwaves cannot be received, it is hardly possible to watch a TV program that is broadcasted while passing through the tunnel. For example, if a drama whose series of stories is emphasized is broadcasted, a flow of stories likely becomes unclear. Alternatively, if a new program is broadcasted, desired news is possibly missed.

Moreover, even if the TV program is recorded on the recorder located at home, the TV program can be watched only after arriving home. That is, as described above, before arriving home, it is hardly possible to watch the TV program that is broadcasted while passing through the tunnel or the like.

In view of the conventional problems described above, it is therefore an object of the present invention to provide a reproducing system and reproducing method which realize a good watching environment in which content data cannot be missed as much as possible even if the content data, such as a TV program, is watched using a mobile terminal, as well as a mobile reproducing apparatus and recording apparatus used for the reproducing system, and a computer program which makes a computer function as such a reproducing system, mobile reproducing apparatus, or recording apparatus.

### Means for Solving the Subject

### (Reproducing System)

The above object of the present invention can be achieved by a first reproducing system provided with: a mobile reproducing apparatus for receiving and reproducing content data on a plurality of channels broadcasted from a broadcast station through a broadcast line; and a recording apparatus for receiving and recording the content data on the plurality of channels broadcasted from the broadcast station through the broadcast line, the mobile reproducing apparatus provided with: a first receiving device for receiving the content data on the desired channel of the content data on the plurality of channels broadcasted through the broadcast line; a first transmitting device for transmitting control information, which is necessary for the recording apparatus to transmit the content data on the desired channel to the mobile reproducing apparatus, to the recording apparatus through a communication line; a second receiving device for receiving the content data on the desired channel transmitted from the recording apparatus through the communication line; a reproducing device for reproducing the content data on the desired channel received by at least one of the first receiving device and the second receiving device; and a controlling device for controlling the reproducing device to switch between (i) a first reproduction operation of reproducing the content data on the desired channel received by the first receiving device and (ii) a second reproduction operation of reproducing the content data on the desired channel received by the second receiving device, the recording apparatus provided with: a third receiving device for receiving the control information transmitted from the mobile reproducing apparatus through the communication line; a fourth receiving device for receiving the content data on the plurality of channels broadcasted through the broadcast line; a recording device for recording the content data on the desired channel of the content data on the plurality of channels received by the fourth receiving device, on the basis of the control information; and a second transmitting device for transmitting the content data on the desired channel recorded by the recording device, to the mobile reproducing apparatus through the communication line.

According to the first reproducing system of the present invention, the mobile reproducing apparatus is provided with the first receiving device and the reproducing device. By the operation of the first receiving device, the mobile reproducing apparatus can receive the content data on the desired channel of the content data on the plurality of channels broadcasted from the broadcast station through the broadcast line. Then, by the operation of the reproducing device, the mobile reproducing apparatus can reproduce the content data on the desired channel received by the operation of the first receiving device, as video images and audio.

On the other hand, the mobile reproducing apparatus is provided with the first transmitting device, the second receiving device, and the controlling device. Moreover, the recording apparatus is provided with the third receiving device, the fourth receiving device, the recording device, and the second transmitting device. By the operation of the first transmitting device, the mobile reproducing apparatus can transmit the control information to the recording apparatus through the communication line different from the broadcast line. The control information is necessary for the recording apparatus to transmit the content data on the desired channel to the mobile reproducing apparatus (or for the recording apparatus to record the content data on the desired channel). The control information includes: channel information indicating the desired channel; recording instruction information indicating an instruction about the recording of the content data on the desired channel (e.g. instructions to start or stop the recording and their timing, etc.); transmission instruction information indicating an instruction about the transmission of the content data on the desired channel from the recording apparatus to the mobile reproducing apparatus (instructions to start or stop the transmission and their timing, etc.); and the like.

By the operation of the third receiving device, the recording apparatus can receive the control information transmitted by the operation of the first transmitting device provided for the mobile reproducing apparatus. Then, by the operation of the recording device, the recording apparatus can record the content data on the desired channel onto an information recording medium or the like, on the basis of the received control information. The content data on the desired channel recorded by the operation of the recording device is the content data received through the broadcast line by the operation of the fourth receiving device. The content data on the desired channel received by the operation of the fourth receiving device (i.e. the content data on the desired channel recorded by the operation of the recording device) is the same as the content data on the desired channel received by the first receiving device provided for the mobile reproducing apparatus. The content data on the desired channel recorded by the operation of the recording device is transmitted to the mobile reproducing apparatus through the communication line by the operation of the second transmitting device.

By the operation of the second receiving device, the mobile reproducing apparatus can receive the content data on the desired channel transmitted by the operation of the second transmitting device provided for the recording apparatus. By this, the mobile reproducing apparatus can reproduce the content data on the desired channel received by the operation of the second receiving device, as video images and audio.

Here, by the operation of the controlling device, the mobile reproducing apparatus can switch between performing the first reproduction operation and performing the second reproduction operation, as occasion demands, wherein the first reproduction operation is to reproduce the content data on the desired channel received by the operation of the first receiving device (i.e. received directly from the broadcast station through the broadcast line), and the second reproduction operation is to reproduce the content data on the desired channel received by the operation of the second receiving device (i.e. received indirectly from the broadcast station through the communication line). That is, in reproducing the content data on the desired channel received by the operation of the first receiving device, the content data on the desired channel received by the operation of the second receiving device is not reproduced. On the other hand, in reproducing the content data on the desired channel received by the operation of the second receiving device, the content data on the desired channel received by the operation of the first receiving device is not reproduced.

For example, if the line status of the broadcast line deteriorates (e.g. (e.g. if an airwave cannot be received or in similar cases, and specifically, if a movable body equipped with the mobile reproducing apparatus enters a tunnel or in similar cases), the second reproduction operation is performed. Thus, even if the line status of the broadcast line deteriorates, it is possible to receive the content data on the desired channel through the communication line different from the broadcast line. By this, even if the line status of the broadcast line deteriorates, a user can watch the content data on the desired channel, using the mobile reproducing apparatus.

Moreover, the content data on the desired channel is recorded on the recording apparatus. Thus, even if the line status of the broadcast line deteriorates to thereby cause such a situation that the transmission of the content data on the desired channel from the recording apparatus to the mobile reproducing apparatus is interrupted, it is possible to transmit the content data on the desired channel recorded on the recording apparatus again after the line status of the broadcast line gets better. Therefore, the user can watch the content data on the desired channel. This prevents or completely eliminates such a disadvantage that the user misses one portion of the content data on the desired channel. Therefore, the user can preferably watch the content data on the desired channel.

On the other hand, for example, if the line status of the broadcast line is good (e.g. if the airwave can be received without any obstacle or in similar cases), the first reproduction operation may be performed, or the second reproduction operation may be performed. However, if the desired content data cannot be reproduced by the second reproduction operation, the first reproduction operation is performed.

As explained above, according to the first reproducing system of the present invention, even if the content data is watched using a mobile terminal, for example, it is possible to realize a good watching environment in which the content data cannot be missed as much as possible.

In one aspect of the first reproducing system of the present invention, the controlling device controls the reproducing device to switch over to the second reproduction operation if the content data on the desired channel is received by the second receiving device.

According to this aspect, if the content data on the desired channel is received through the communication line, the content data on the desired channel is preferentially reproduced through the communication line. Therefore, as compared to a case of reproducing the content data on the desired channel received through the broadcast line whose line status can be easily changed, it is possible to relatively improve the reproduction quality of the content data on the desired channel.

In another aspect of the first reproducing system of the present invention, the controlling device controls the reproducing device to switch over to the second reproduction operation after the reproducing device comes to be able to reproduce the content data on the desired channel received by the second receiving device.

According to this aspect, on the mobile reproducing apparatus, it is possible to reproduce the content data on the desired channel received through the communication line, without any disadvantage. Incidentally, the expression that "the reproducing device comes to be able to reproduce the content data on the desired channel" indicates that the content data on the desired channel equal to or larger than a predetermined size transmitted through the communication line is stored (or buffered), or that an initial operation for the mobile reproducing apparatus to perform the second reproduction operation is completed, or the like, as described later.

Incidentally, if the second reproduction operation cannot be performed (e.g. if the content data on the desired channel cannot be received through the communication line, if the content data on the desired channel is not stored on a buffering device described later, if the initial operation for the mobile reproducing apparatus to perform the second reproduction operation is not completed, or the like), the first reproduction operation is preferably performed.

In another aspect of the first reproducing system of the present invention, the mobile reproducing apparatus is further provided with a buffering device for temporarily storing the content data on the desired channel transmitted from the recording apparatus through the communication line, and the controlling device controls the reproducing device to switch over to the second reproduction operation after the content data on the desired channel equal to or larger than a predetermined size received by the second receiving device is stored on the buffering device.

According to this aspect, if the second reproduction operation is performed, the content data on the desired channel equal to or larger than a predetermined size is stored on the buffering device. Specifically, for example, the content data on the desired channel of a size which allows several-minute reproduction or larger size is stored on the buffering device. By this, even if a movable body equipped with the mobile reproducing apparatus enters a tunnel or the like to thereby deteriorate the line status of the communication line, it is possible to reproduce the content data on the desired channel stored on the buffering device. Therefore, even if the line status of the communication line deteriorates, the user can watch the content data on the desired channel.

In another aspect of the first reproducing system of the present invention, at least one of the content data on the plurality of channels includes commercial data discretely or periodically distributed along a reproduction time axis of the content data, and the controlling device controls the reproducing device to switch over to the second reproduction operation and start the reproduction from the commercial data while the commercial data is reproduced by the first reproduction operation.

According to this aspect, in the content data (specifically, for example, a one-hour TV program), the commercial data (so-called CM) is distributed, discretely (e.g. randomly reproduced in a one-hour reproduction time) or periodically (e.g. reproduced every 15 minutes in a one-hour reproduction time). When the content data is reproduced, the first reproduction operation is switched over to the second reproduction operation. At this time, switching timing or a reproduction start point of the content data is adjusted so as to reproduce the commercial data even after switching over to the second reproduction operation.

By this, if the first reproduction operation is switched over to the second reproduction operation, the user can keep watching the content data on the desired channel, rather naturally, without recognizing much that the reproduction operation is switched over.

Incidentally, even if the second reproduction operations is switched over to the first reproduction operation, in the same manner, the reproduction operation is preferably controlled to switch over to the first reproduction operation and start the reproduction from the commercial data while the commercial data is reproduced by the second reproduction operation.

In another aspect of the first reproducing system of the present invention, the recording apparatus is further provided with a first calculating device for calculating an elapsed time after the recording of the content data on the desired channel is started by the recording device, and the second transmitting device starts the transmission of the content data on the desired channel recorded by the recording device, after the elapsed time calculated by the first calculating device exceeds a predetermined first threshold value.

According to this aspect, for example, after the recording apparatus completes the recording of the content data on the desired channel equal to or larger than a certain size, the transmission of the content data on the desired channel is started. By this, even if some disadvantage occurs on the recording apparatus to thereby temporarily stop the recording operation, the recording apparatus can transmit the content data on the desired channel, to the mobile reproducing apparatus.

In another aspect of the first reproducing system of the present invention, the mobile reproducing apparatus is further provided with: a detecting device for detecting a current position of the mobile reproducing apparatus; a predicting device for predicting a plurality of candidate positions to which the mobile reproducing apparatus likely travels in a future, on the basis of the current position detected by the detecting device and map information; and a judging device for judging whether or not the first receiving device can receive the content data on the desired channel broadcasted through the broadcast line, in each of the plurality of candidate positions, and the second transmitting device starts the transmission of the content data on the desired channel recorded by the recording device if it is judged by the judging device that the first receiving device cannot receive the content data on the desired channel broadcasted through the broadcast line.

According to this aspect, by the operation of the detecting device, the current position of the mobile reproducing apparatus (specifically a movable body equipped with the mobile reproducing apparatus) is detected, using e.g. GPS, various sensors, or the like. Then, by the operation of the generating device, the plurality of candidate positions to which the mobile reproducing apparatus likely travels in the future are predicted, in view of a traveling direction of the mobile reproducing apparatus and a traveling route so far, and the like, using the current position and the map information (e.g. data indicating a map itself, or data indicating geography and buildings on the map). Then, by the operation of the judging device, it is judged whether or not the content data on the desired channel broadcasted through the broadcast line can be received with the first receiving device in each of the plurality of candidate positions. For example, it is judged whether or not there is a tunnel, underground road, or the like in which the reception through the broadcast line is impossible, in the candidate position. As a result of the judgment, if it is judged that there is included the candidate position in which the content data on the desired channel broadcasted through the broadcast line cannot be received, the transmission of the content data on the desired channel to the mobile reproducing apparatus is started by the operation of the second transmitting device.

By this, in the future, even if the mobile reproducing apparatus actually travels to the candidate position in which the first receiving device cannot receive the content data on the desired channel, it is possible to reproduce the content data on the desired channel transmitted through the communication line. That is, the mobile reproducing apparatus can continue to reproduce the content data on the desired channel.

In another aspect of the first reproducing system of the present invention, at least one of the content data on the plurality of channels includes commercial data discretely or periodically distributed along a reproduction time axis of the content data, and the second transmitting device starts the transmission of the content data on the desired channel recorded by the recording device, using the commercial data recorded by the recording device as a start point, after the commercial data is recorded by the recording device.

According to this aspect, the content data on the desired channel is transmitted from the recording apparatus to the mobile reproducing apparatus through the communication, using the commercial data as the start point. Thus, on the mobile reproducing apparatus, the reproduction can be started from the commercial data. Specifically, when the commercial data is reproduced as described above, the first reproduction operation is switched over to the second reproduction operation, and the commercial data is reproduced even after switching over to the second reproduction operation. By this, if the first reproduction operation is switched over to the second reproduction operation, the user can keep watching the content data on the desired channel, rather naturally, without recognizing much that the reproduction operation is switched over.

In an aspect of the reproducing system in which the transmission of the content data on the desired channel is started using the commercial data as the start point, as described above, the second transmitting device may start the transmission of the content data on the desired channel recorded by the recording device, using the commercial data recorded by the recording device as a start point, while the commercial data is reproduced by the first reproduction operation, and the controlling device may control the reproducing device to switch over to the second reproduction operation and start the reproduction from the commercial data, while the commercial data is reproduced by the first reproduction operation.

By virtue of such construction, when the commercial data is reproduced, the first reproduction operation is switched over to the second reproduction operation, and the commercial data is reproduced even after switching over to the second reproduction operation. By this, if the first reproduction operation is switched over to the second reproduction operation, the user can keep watching the content data on the desired channel, rather naturally, without recognizing much that the reproduction operation is switched over.

In another aspect of the first reproducing system of the present invention, the mobile reproducing apparatus is further provided with a second calculating device for calculating an elapsed time after channel selection is performed on the content data on the plurality of channels, and the first transmitting device transmits the control information after the elapsed time calculated by the second calculating device exceeds a predetermined second threshold value.

According to this aspect, in so-called zapping to change the channel frequently, the control information is not transmitted. The control information is transmitted after confirming that the channel is not changed (specifically, the channel is not changed for a certain time after the channel is selected). This eliminates unnecessary transmission (or generation) of the control information.

In another aspect of the first reproducing system of the present invention, the mobile reproducing apparatus is further provided with: a detecting device for detecting a current position of the mobile reproducing apparatus; a predicting device for predicting a plurality of candidate positions to which the mobile reproducing apparatus likely travels in a future, on the basis of the current position detected by the detecting device and map information; and a judging device for judging whether or not the first receiving device can receive the content data on the desired channel broadcasted through the broadcast line, in each of the plurality of candidate positions, and the first transmitting device transmits the control information to the recording apparatus through the communication line if it is judged by the judging device that the first receiving device cannot receive the content data on the desired channel broadcasted through the broadcast line.

According to this aspect, if it is judged that the candidate position in which the content data on the desired channel broadcasted through the broadcast line cannot be received is included. The control information is transmitted from the mobile reproducing apparatus to the recording apparatus. The recording apparatus that has received the control information starts the recording of the content data on the desired channel and the transmission to the mobile reproducing apparatus.

By this, in the future, even if the mobile reproducing apparatus actually travels to the candidate position in which the first receiving device cannot receive the content data on the desired channel, it is possible to reproduce the content data on the desired channel transmitted through the communication line. That is, the mobile reproducing apparatus can continue to reproduce the content data on the desired channel.

In another aspect of the first reproducing system of the present invention, the mobile reproducing apparatus is further provided with a buffering device for temporarily storing the content data on the desired channel transmitted from the recording apparatus through the communication line.

According to this aspect, even if a movable body equipped with the mobile reproducing apparatus enters a tunnel or the like to thereby deteriorate the line status of the communication line, it is possible to reproduce the content data on the desired channel stored on the buffering device. Therefore, even if the line status of the communication line deteriorates, the user can watch the content data on the desired channel.

The above object of the present invention can be also achieved by a second reproducing system provided with: a mobile reproducing apparatus for receiving and reproducing content data on a plurality of channels broadcasted from a broadcast station through a broadcast line; and a recording apparatus for storing the content data on the plurality of channels broadcasted from the broadcast station through the broadcast line, the mobile reproducing apparatus provided with: a first receiving device for receiving the content data on the desired channel of the content data on the plurality of channels broadcasted through the broadcast line; a first transmitting device for transmitting control information, which is necessary for the recording apparatus to transmit the content data on the desired channel to the mobile reproducing apparatus, to the recording apparatus through a communication line; a second receiving device for receiving the content data on the desired channel transmitted from the recording apparatus through the communication line; a reproducing device for reproducing the content data on the desired channel received by at least one of the first receiving device and the second receiving device; and a controlling device for controlling the reproducing device to switch between (i) a first reproduction operation of reproducing the content data on the desired channel received by the first receiving device and (ii) a second reproduction operation of reproducing the content data on the desired channel received by the second receiving device, the recording apparatus provided with: a third receiving device for receiving the control information transmitted from the mobile reproducing apparatus through the communication line; a storing device for storing the content data on the plurality of channels broadcasted through the broadcast line; and a second transmitting device for transmitting the content data on the desired channel stored by the storing device, to the mobile reproducing apparatus through the communication line.

According to the second reproducing system of the present invention, as in the first reproducing system described above, by the operation of the controlling device, the mobile reproducing apparatus can switch over between performing the first reproduction operation and performing the second reproduction operation, as occasion demands wherein the first reproduction operation is to reproduce the content data on the desired channel received by the operation of the first receiving device (i.e. received directly from the broadcast station through the broadcast line), and the second reproduction operation is to reproduce the content data on the desired channel received by the operation of the second receiving device (i.e. received indirectly from the broadcast station through the communication line).

In the second reproducing system, in particular, the content data on the desired channel stored in the storing device provided for the recording apparatus is transmitted through the communication line by the operation of the second transmitting device. That is, even if the content data on the desired channel received through the broadcast line is not sequentially recorded, since the storing device in which it is already recorded is provided, the second reproducing system can receive the same various benefits as those of the first reproducing system described above.

Incidentally, in response to the various aspects of the first reproducing system of the present invention described above, the second reproducing system of the present invention can employ various aspects.

### (Reproducing Method)

The above object of the present invention can be also achieved by a first reproducing method in a reproducing system provided with: a mobile reproducing apparatus for receiving and reproducing content data on a plurality of channels broadcasted from a broadcast station through a broadcast line; and a recording apparatus for receiving and recording the content data on the plurality of channels broadcasted from the broadcast station through the broadcast line, the reproducing method provided with: a first receiving process of receiving the content data on the desired channel of the content data on the plurality of channels broadcasted through the broadcast line, on the mobile reproducing apparatus; a first transmitting process of transmitting control information, which is necessary for the recording apparatus to transmit the content data on the desired channel to the mobile reproducing apparatus, to the recording apparatus through a communication line; a second receiving process of receiving the content data on the desired channel transmitted from the recording apparatus through the communication line; a reproducing process of reproducing the content data on the desired channel received by at least one of the first receiving process and the second receiving process; and a controlling process of switching between (i) a first reproduction operation of reproducing the content data on the desired channel received by the first receiving device and (ii) a second reproduction operation of reproducing the content data on the desired channel received by the second receiving device; a third receiving process of receiving the control information transmitted from the mobile reproducing apparatus through the communication line; a fourth receiving process of receiving the content data on the plurality of channels broadcasted through the broadcast line, on the recording device; a recording process of recording the content data on the desired channel of the content data on the plurality of channels received by the third receiving process, on the basis of the control information; and a second transmitting process of transmitting the content data on the desired channel recorded by the recording process, to the mobile reproducing apparatus through the communication line.

According to the first reproducing method of the present invention it is possible to receive the same various benefits as those of the first reproducing system of the present invention described above.

Incidentally, in response to the various aspects of the first reproducing system of the present invention described above, the first reproducing method of the present invention can employ various aspects.

The above object of the present invention can be also achieved by a second reproducing method in a reproducing system provided with: a mobile reproducing apparatus for receiving and reproducing content data on a plurality of channels broadcasted from a broadcast station through a broadcast line; and a recording apparatus for storing the content data on the plurality of channels broadcasted from the broadcast station through the broadcast line, the reproducing method provided with: a first receiving process of receiving the content data on the desired channel of the content data on the plurality of channels broadcasted through the broadcast line; a first transmitting process of transmitting control information, which is necessary for the recording apparatus to transmit the content data on the desired channel to the mobile reproducing apparatus, to the recording apparatus through a communication line; a second receiving process of receiving the content data on the desired channel transmitted from the recording apparatus through the communication line; a reproducing process of reproducing the content data on the desired channel received by at least one of the first receiving process and the second receiving process; and a controlling process of switching between (i) a first reproduction operation of reproducing the content data on the desired channel received by the first receiving device and (ii) a second reproduction operation of reproducing the content data on the desired channel received by the second receiving device, a third receiving process of receiving the control information transmitted from the mobile reproducing apparatus through the communication line; and a second transmitting process of transmitting the content data on the desired channel stored by the recording apparatus, to the mobile reproducing apparatus through the communication line.

According to the second reproducing method of the present invention it is possible to receive the same various benefits as those of the second reproducing system of the present invention described above.

Incidentally, in response to the various aspects of the second reproducing system of the present invention described above, the second reproducing method of the present invention can employ various aspects.

### (Mobile Reproducing Apparatus)

The above object of the present invention can be also achieved by a mobile reproducing apparatus for receiving content data on a plurality of channels broadcasted from a broadcast station through a broadcast line, the mobile reproducing apparatus provided with: a first receiving device for receiving the content data on the desired channel of the content data on the plurality of channels broadcasted through the broadcast line; a first transmitting device for transmitting control information, which is necessary for a recording apparatus to transmit the content data on the desired channel to the mobile reproducing apparatus, to the recording apparatus through a communication line; a second receiving device for receiving the content data on the desired channel transmitted from the recording apparatus through the communication line; a reproducing device for reproducing the content data on the desired channel received by at least one of the first receiving device and the second receiving device; and a controlling device for controlling the reproducing device to switch between (i) a first reproduction operation of reproducing the content data on the desired channel received by the first receiving device and (ii) a second reproduction operation of reproducing the content data on the desired channel received by the second receiving device.

According to the mobile reproducing apparatus of the present invention it is possible to receive the same various benefits as those of the first or second reproducing system of the present invention described above.

Incidentally, in response to the various aspects of the first or second reproducing system of the present invention described above, the mobile reproducing apparatus of the present invention can employ various aspects.

### (Recording Apparatus)

The above object of the present invention can be also achieved by a first recording apparatus for receiving and recording content data on a plurality of channels broadcasted from a broadcast station through a broadcast line, the recording apparatus provided with: a third receiving device for receiving control information, which is transmitted from a mobile reproducing apparatus through a communication line and which is necessary for the recording apparatus to transmit the content data on the desired channel of the content data on the plurality of channels to the mobile reproducing apparatus; a fourth receiving device for receiving the content data on the plurality of channels broadcasted through the broadcast line; a recording device for recording the content data on the desired channel of the content data on the plurality of channels received by the fourth receiving device, on the basis of the control information; and a second transmitting device for transmitting the content data on the desired channel recorded by the recording device, to the mobile reproducing apparatus through the communication line.

According to the first recording apparatus of the present invention it is possible to receive the same various benefits as those of the first reproducing system of the present invention described above.

Incidentally, in response to the various aspects of the first reproducing system of the present invention described above, the first recording apparatus of the present invention can employ various aspects.

The above object of the present invention can be also achieved by a second recording apparatus for storing content data on a plurality of channels broadcasted from a broadcast station through a broadcast line, the recording apparatus provided with: a third receiving device for receiving control information, which is transmitted from a mobile reproducing apparatus through a communication line and which is necessary for the recording apparatus to transmit the content data on the desired channel of the content data on the plurality of channels to the mobile reproducing apparatus; a storing device for storing the content data on the plurality of channels broadcasted through the broadcast line; and a second transmitting device for transmitting the content data on the desired channel stored by the storing device, to the mobile reproducing apparatus through the communication line.

According to the second recording apparatus of the present invention it is possible to receive the same various benefits as those of the second reproducing system of the present invention described above.

Incidentally, in response to the various aspects of the second reproducing system of the present invention described above, the second recording apparatus of the present invention can employ various aspects.

### (Computer Program)

The above object of the present invention can be also achieved by a first computer program for controlling a computer provided in a mobile reproducing apparatus for receiving content data on a plurality of channels broadcasted from a broadcast station through a broadcast line, the mobile reproducing apparatus provided with: a first receiving device for receiving the content data on the desired channel of the content data on the plurality of channels broadcasted through the broadcast line; a first transmitting device for transmitting control information, which is necessary for a recording apparatus to transmit the content data on the desired channel to the mobile reproducing apparatus, to the recording apparatus through a communication line; a second receiving device for receiving the content data on the desired channel transmitted from the recording apparatus through the communication line; a reproducing device for reproducing the content data on the desired channel received by at least one of the first receiving device and the second receiving device; and a controlling device for controlling the reproducing device to switch between (i) a first reproduction operation of reproducing the content data on the desired channel received by the first receiving device and (ii) a second reproduction operation of reproducing the content data on the desired channel received by the second receiving device, the computer program making the computer function as at least one portion of the first receiving device, the first transmitting device, the second receiving device, the reproducing device, and the controlling device.

According to the first computer program of the present invention, the aforementioned mobile reproducing apparatus of the present invention (or first reproducing system of the present invention) can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

Incidentally, in response to the various aspects of the mobile reproducing apparatus of the present invention described above, the first computer program of the present invention can employ various aspects.

The above object of the present invention can be also achieved by a second computer program for controlling a computer provided in a recording apparatus for receiving and recording content data on a plurality of channels broadcasted from a broadcast station through a broadcast line, the recording apparatus provided with: a third receiving device for receiving control information, which is transmitted from a mobile reproducing apparatus through a communication line and which is necessary for the recording apparatus to transmit the content data on the desired channel of the content data on the plurality of channels to the mobile reproducing apparatus; a fourth receiving device for receiving the content data on the plurality of channels broadcasted through the broadcast line; a recording device for recording the content data on the desired channel of the content data on the plurality of channels received by the fourth receiving device, on the basis of the control information; and a second transmitting device for transmitting the content data on the desired channel recorded by the recording device, to the mobile reproducing apparatus through the communication line, the computer program making the computer function as at least one portion of the third receiving device, the fourth receiving device, the recording device, and the second transmitting device.

According to the second computer program of the present invention, the aforementioned first recording apparatus of the present invention (or first reproducing system of the present invention) can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

Incidentally, in response to the various aspects of the first recording apparatus of the present invention described above, the second computer program of the present invention can employ various aspects.

The above object of the present invention can be also achieved by a third computer program for controlling a computer provided in a recording apparatus for storing content data on a plurality of channels broadcasted from a broadcast station through a broadcast line, the recording apparatus provided with: a third receiving device for receiving control information, which is transmitted from a mobile reproducing apparatus through a communication line and which is necessary for the recording apparatus to transmit the content data on the desired channel of the content data on the plurality of channels to the mobile reproducing apparatus; a storing device for storing the content data on the plurality of channels broadcasted through the broadcast line; and a second transmitting device for transmitting the content data on the desired channel stored by the storing device, to the mobile reproducing apparatus through the communication line, the computer program making the computer function as at least one portion of the third receiving device, the storing device, and the second transmitting device.

According to the third computer program of the present invention, the aforementioned second recording apparatus of the present invention (or second reproducing system of the present invention) can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

Incidentally, in response to the various aspects of the second recording apparatus of the present invention described above, the third computer program of the present invention can employ various aspects.

The above object of the present invention can be also achieved by a first computer program product in a computer-readable medium for tangibly embodying a program of instructions executable by a computer provided in the mobile reproducing apparatus of the present invention described above, the computer program product making the computer function as at least one portion of the first receiving device, the first transmitting device, the second receiving device, the reproducing device, and the controlling device.

The above object of the present invention can be also achieved by a second computer program product in a computer-readable medium for tangibly embodying a program of instructions executable by a computer provided in the first recording apparatus of the present invention described above, the computer program product making the computer function as at least one portion of the third receiving device, the fourth receiving device, the recording device, and the second transmitting device.

The above object of the present invention can be also achieved by a third computer program product in a computer-readable medium for tangibly embodying a program of instructions executable by a computer provided in the second recording apparatus of the present invention described above, the computer program product making the computer function as at least one portion of the third receiving device, the storing device, and the second transmitting device.

According to each of the computer program products of the present invention, the mobile reproducing apparatus (or first reproducing system of the present invention), the first recording apparatus (or first reproducing system of the present invention), or the second recording apparatus (or second reproducing system of the present invention) of the present invention described above can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the mobile reproducing apparatus (or first reproducing system of the present invention), the first recording apparatus (or first reproducing system of the present invention), or the second recording apparatus (or second reproducing system of the present invention) of the present invention described above.

These effects and other advantages of the present invention will become more apparent from the embodiment explained below.

As explained above, according to the first reproducing system of the present invention, it is provided with: the mobile reproduction apparatus equipped with the first receiving device, the first transmitting device, the second receiving device, the reproducing device, and the switching device; and the recording apparatus equipped with the third receiving device, the fourth receiving device, the recording device, and the second transmitting device. According to the second reproducing system of the present invention, it is provided with: the mobile reproduction apparatus equipped with the first receiving device, the first transmitting device, the second receiving device, the reproducing device, and the switching device; and the recording apparatus equipped with the third receiving device, the storing device, and the second transmitting device. Therefore, even if the content data, such as a TV program, is watched using a mobile terminal, it is possible to realize a good watching environment in which the content data cannot be missed as much as possible.

### Brief Description of Drawings

[FIG. 1] FIG. 1 is a block diagram conceptually showing the basic structure of a reproducing system in an embodiment.
[FIG. 2] FIG. 2 is a block diagram conceptually showing the basic structure of a car navigation apparatus provided for the reproducing system in the embodiment.
[FIG. 3] FIG. 3 is a block diagram conceptually showing the basic structure of a hard disk recorder provided for the reproducing system in the embodiment.
[FIG. 4] FIG. 4 is a flowchart conceptually showing a flow of a first operation example of the reproducing system in the embodiment.
[FIG. 5] FIG. 5 is a timing chart conceptually showing a first example of transmission timing of content data from the hard disk recorder to the car navigation apparatus and reproduction timing on the car navigation apparatus of the received content data.
[FIG. 6] FIG. 6 is a timing chart conceptually showing a second example of the transmission timing of the content data from the hard disk recorder to the car navigation apparatus and the reproduction timing on the car navigation apparatus of the received content data.
[FIG. 7] FIG. 7 is a timing chart conceptually showing a third example of the transmission timing of the content data from the hard disk recorder to the car navigation apparatus and the reproduction timing on the car navigation apparatus of the received content data.
[FIG. 8] FIG. 8 is a timing chart conceptually showing a fourth example of the transmission timing of the content data from the hard disk recorder to the car navigation apparatus and the reproduction timing on the car navigation apparatus of the received content data.
[FIG. 9] FIG. 9 is a timing chart conceptually showing a fifth example of the transmission timing of the content data from the hard disk recorder to the car navigation apparatus and the reproduction timing on the car navigation apparatus of the received content data.
[FIG. 10] FIG. 10 is a flowchart conceptually showing a flow of a second operation example of the reproducing system in the embodiment.
[FIG. 11] FIG. 11 is a timing chart conceptually showing a sixth example of the transmission timing of the content data from the hard disk recorder to the car navigation apparatus and the reproduction timing on the car navigation apparatus of the received content data.
[FIG. 12] FIG. 12 is a flowchart conceptually showing another flow of the second operation example of the reproducing system in the embodiment.

### Description of Reference Codes

- 1: reproducing system
- 100: car navigation apparatus
- 101: broadcast antenna device
- 102: tuner device
- 103: network communication device
- 104: reception buffer
- 106: reproduction device
- 107: GPS reception device
- 108: sensor device
- 109: hard disk
- 112: CPU
- 113: control information generation device
- 114: reproduction source switching device
- 115: program analysis device
- 117: candidate position prediction device
- 118: memory
- 200: hard disk recorder
- 201: broadcast antenna device
- 202: tuner device
- 203: network communication device
- 206: reproduction device
- 207: recording device
- 209: hard disk
- 212: CPU
- 218: memory

### Best Mode for Carrying Out the Invention

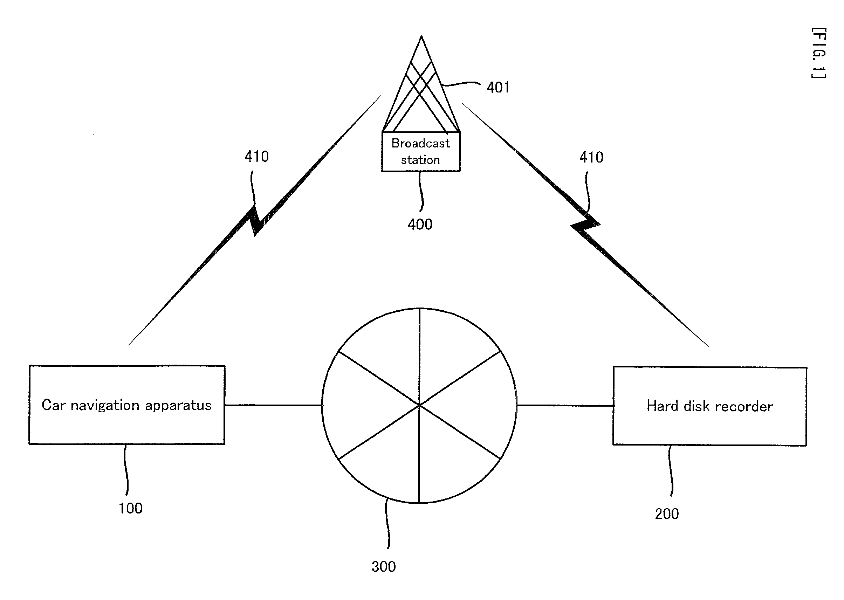

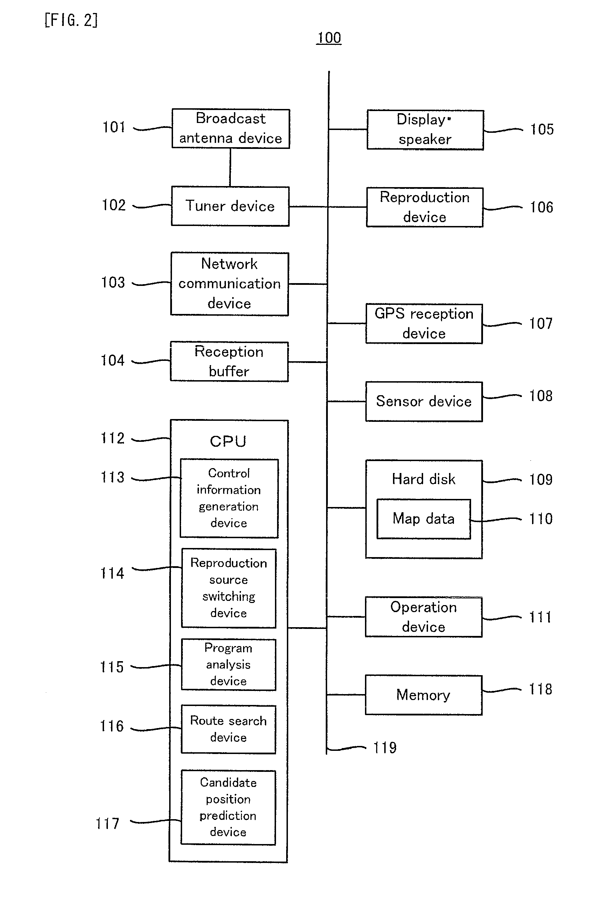

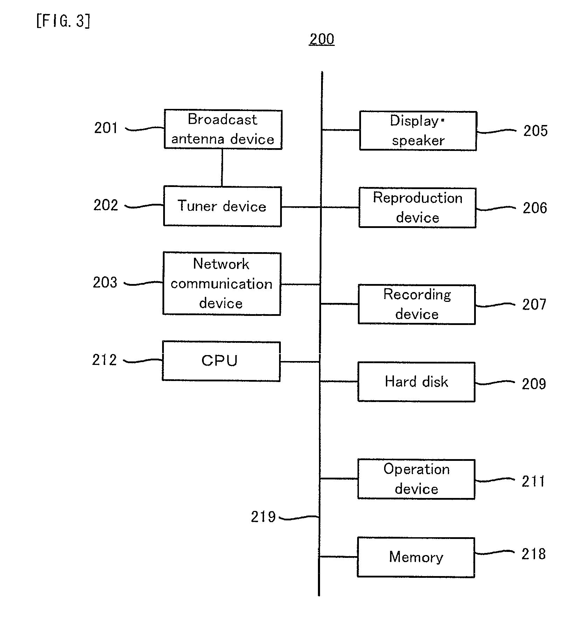

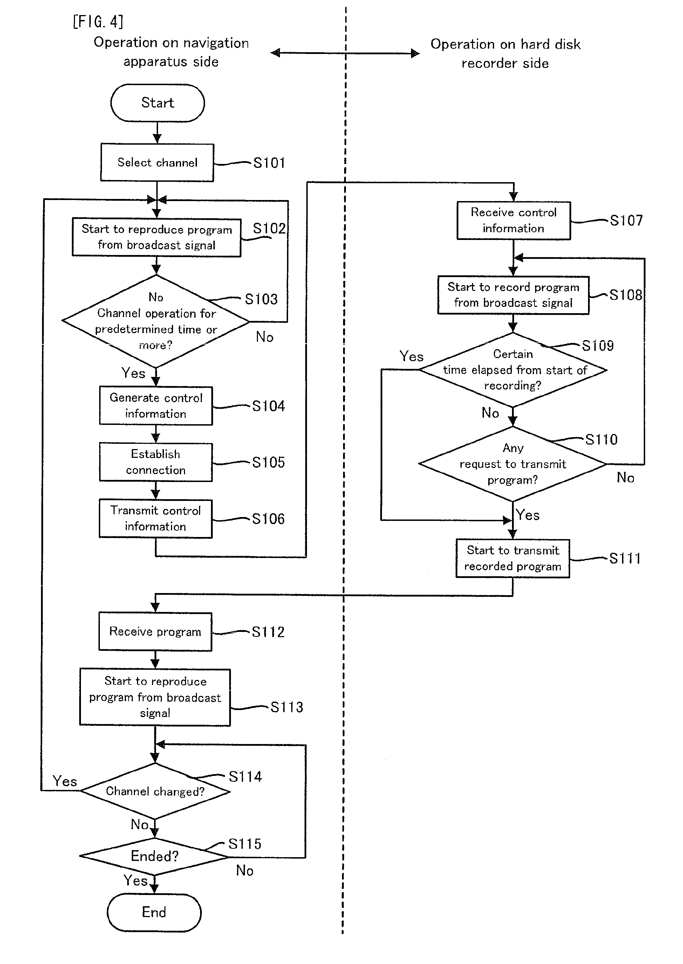

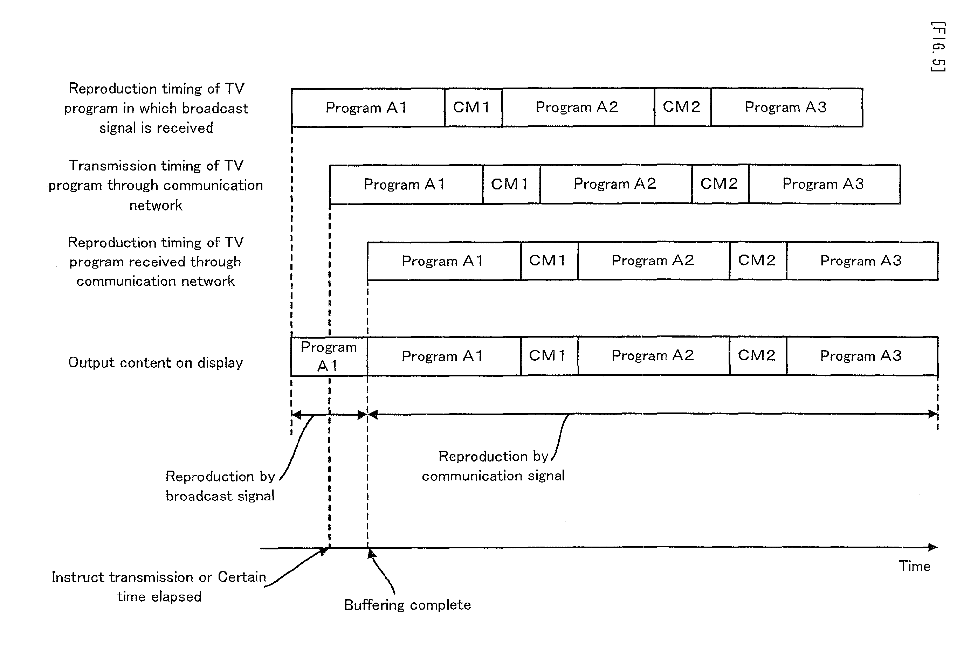

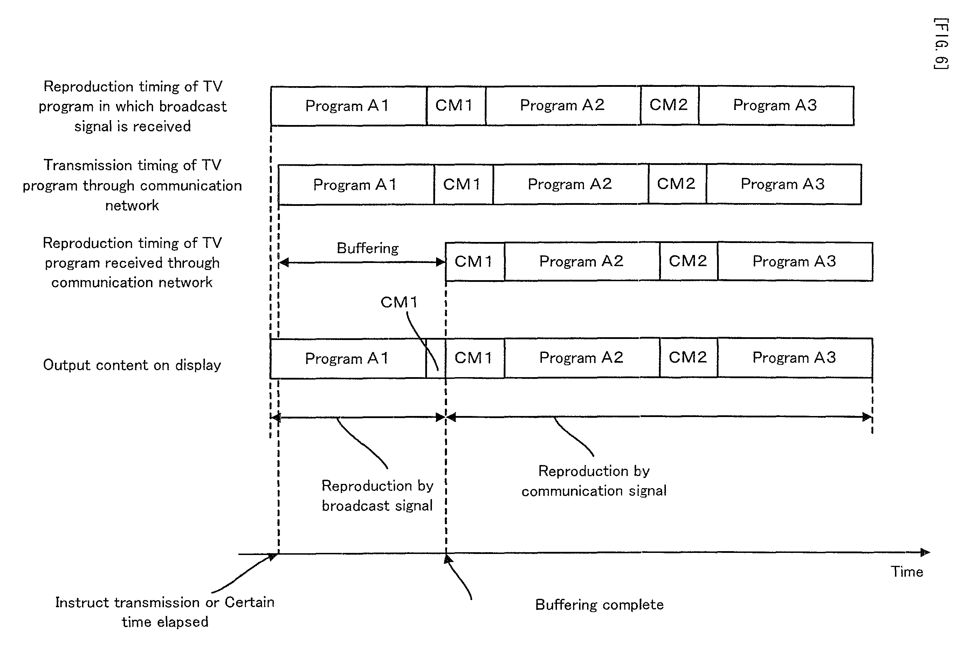

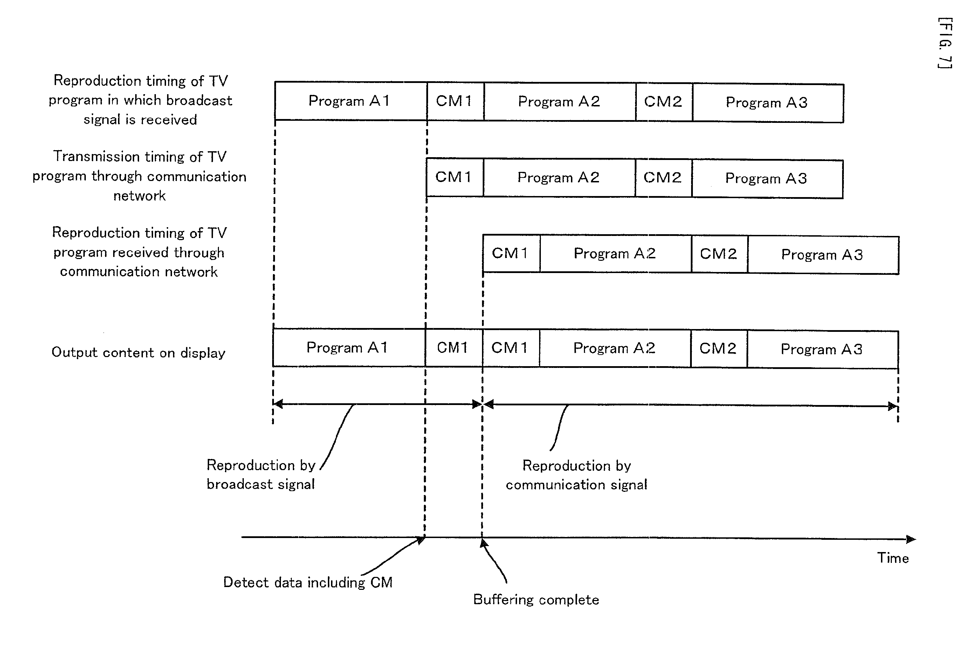

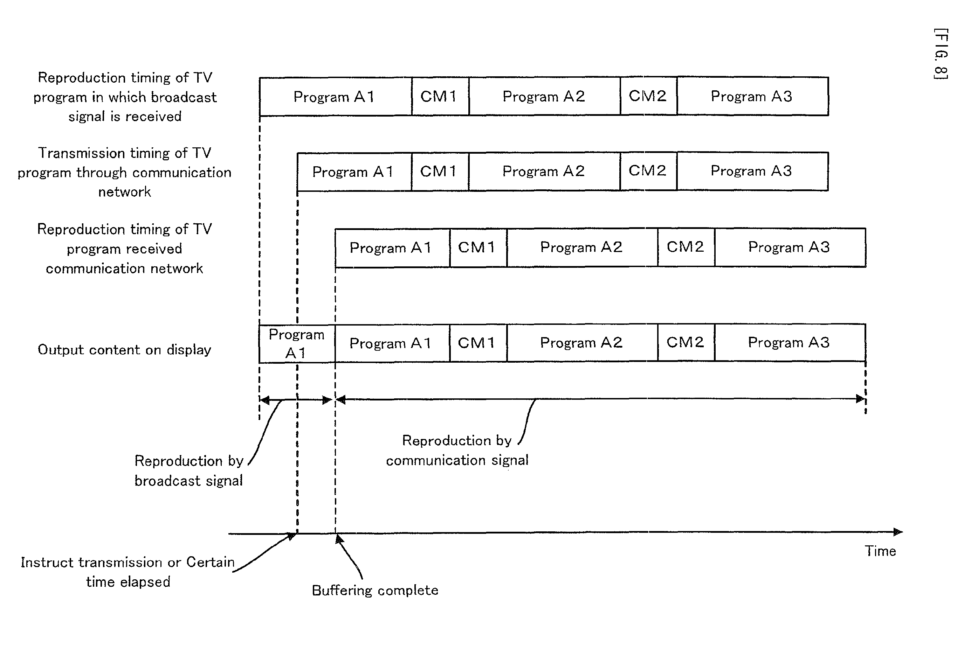

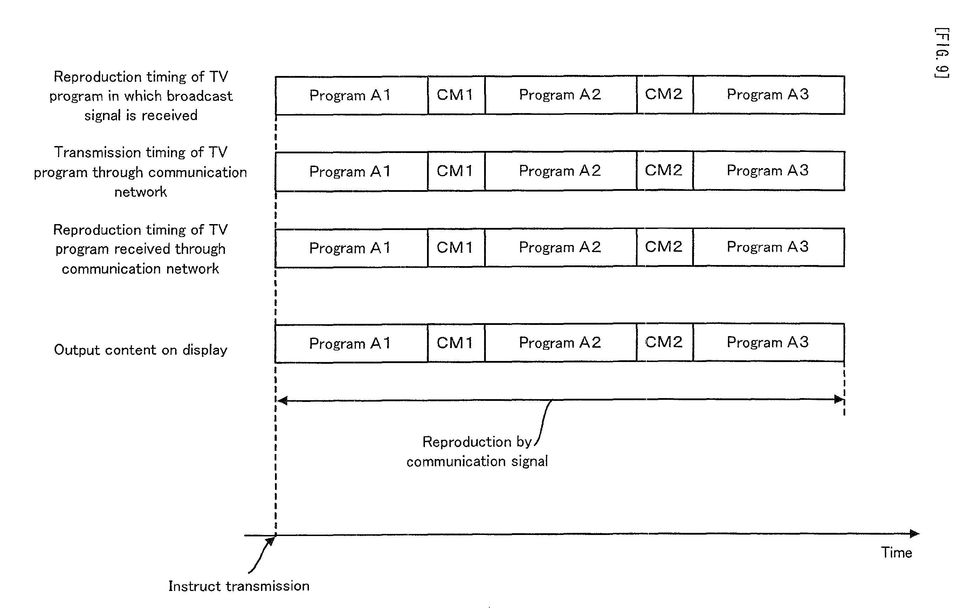

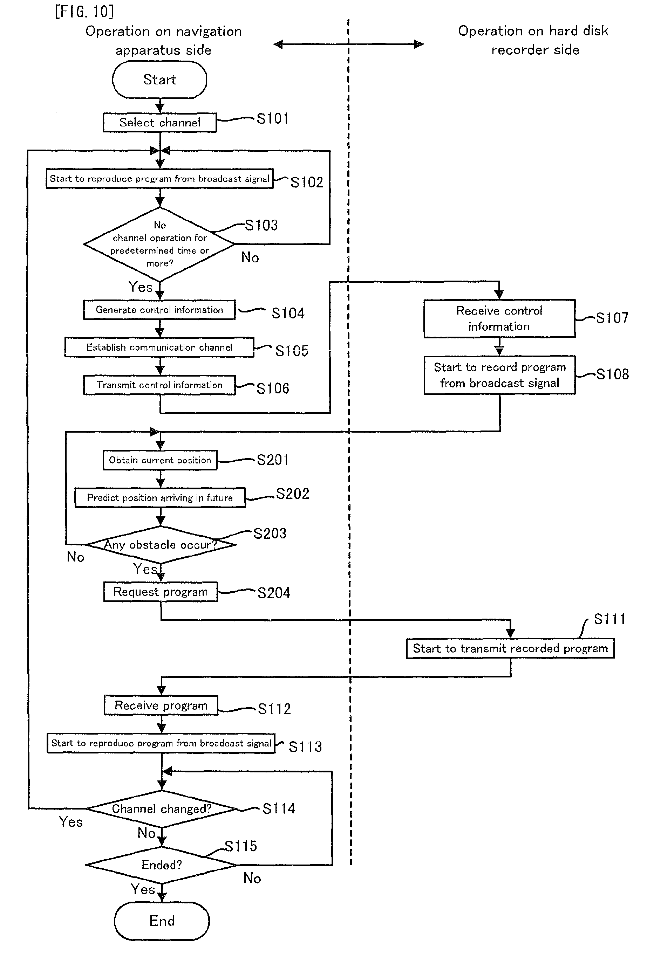

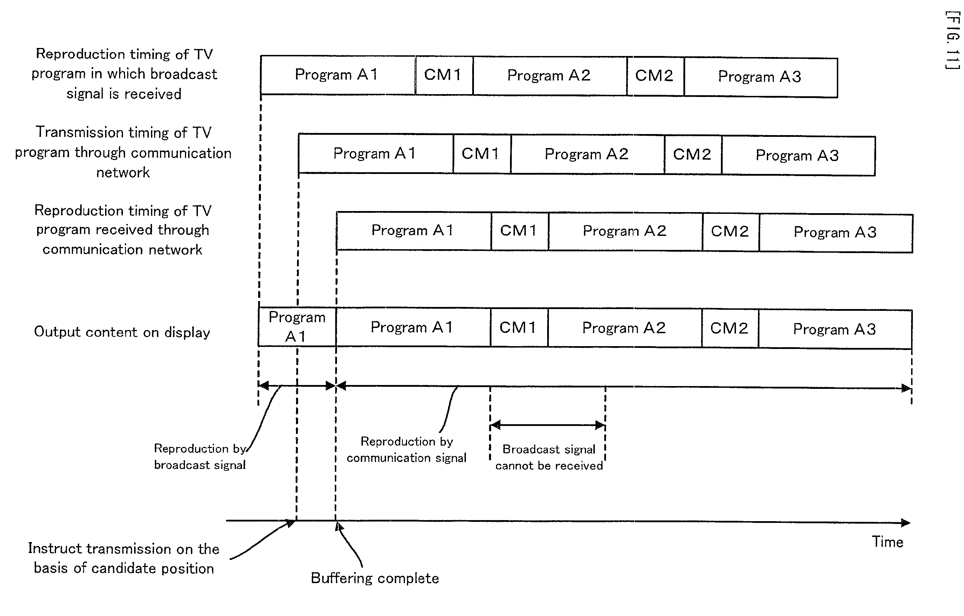

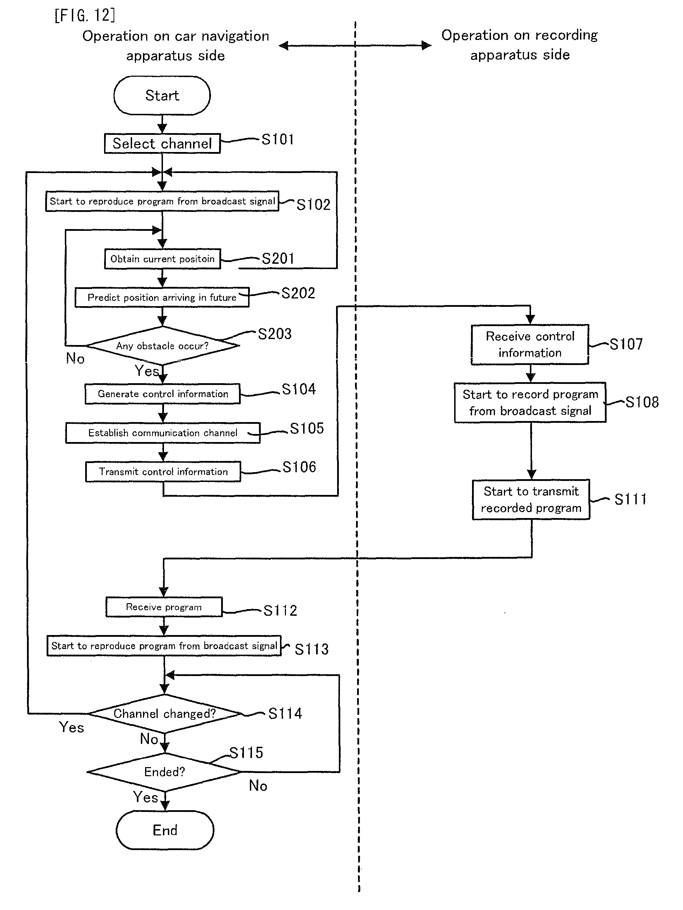

Hereinafter, the best mode for carrying out the present invention will be explained in each embodiment in order with reference to the drawings.
(1) Basic structure
   Firstly, with reference to FIG. 1 to FIG. 3, an explanation will be given on the basic structure of a reproducing system 1 as an embodiment of the reproducing system of the present invention. FIG. 1 is a block diagram conceptually showing the basic structure of the reproducing system 1 in the embodiment. FIG. 2 is a block diagram conceptually showing the basic structure of a car navigation apparatus 100 provided for the reproducing system 1 in the embodiment. FIG. 3 is a block diagram conceptually showing the basic structure of a hard disk recorder 200 provided for the reproducing system 1 in the embodiment.
   As shown in FIG. 1, the reproducing system 1 in the embodiment is provided with: a car navigation apparatus 100; a hard disk apparatus 200; a communication network 300; and a broadcast station 400.
   The car navigation apparatus 100 constitutes one specific example of the "mobile reproducing apparatus" of the present invention, and is a navigation apparatus mounted on a movable body, such as a vehicle, for example. The car navigation apparatus 100, in particular, has a function for receiving an airwave 410 broadcasted from the broadcast station 400 and for reproducing a TV program obtained by demodulating the airwave 410. Moreover, the car navigation apparatus 100 has a function for performing a wireless or partially wired communication with the hard disk recorder 200 or other external equipment through the communication network 300, and a function for receiving a TV program from the hard disk recorder 200 and reproducing the TV program. The specific structure of the car navigation apparatus 100 will be detailed later (refer to FIG. 2).
   Incidentally, even a mobile terminal, such as a mobile phone, a PDA, or a mobile personal computer, having the function for receiving airwaves and the communication function, can perform operations described later, as in the car navigation apparatus 100. That is, any apparatus that is excellent in portability, that is scheduled to travel outside, and that has the function for receiving airwaves and the communication function can perform the operations described later, as in the car navigation apparatus 100.
   The hard disk recorder 200 constitutes one specific example of the "recording device" of the present invention and is provided at home or the like. The hard disk recorder 200 has a function for receiving the airwave 410 broadcasted from the broadcast station 400 and for recording the TV program obtained by demodulating the airwave 410 onto an information recording medium, such as a hard disk. Moreover, the hard disk recorder 200 has a function for performing a wireless or partially wired communication with the hard disk recorder 200 or other external equipment through the communication network 300. The specific structure of the hard disk recorder 200 will be detailed later (refer to FIG. 3).
   Incidentally, any apparatus that is scheduled to be located outside and that has the aforementioned functions can perform the operations described later, as in the hard disk recorder 200.
   The communication network 300 constitutes one specific example of the "communication line" of the present invention, and includes a wireless network, such as a mobile phone network, IMT-2000, PHS or wireless LAN. Incidentally, the entire communication line between the car navigation apparatus 100 and the hard disk recorder does not have to be wireless, and one portion of the communication line may be wired. For example, currently, the communication line connected between the Internet network and the mobile phone network through a connecting apparatus, such as a mobile internet server, is popular. The wired / wireless-mixed communication line described above may be used as the communication network 300. If such a communication line is used, the hard disk recorder 200 is connected to the Internet network through a fixed phone line (wired) or the like.
   The broadcast station 400 is a base station which broadcasts TV programs, and it is provided with a transmission antenna 401. The transmission antenna 401 transmits the airwave 410 therefrom. The airwave 410 is modulated by the content data which indicates a TV program, such as a new program, variety program, and drama program. The airwave 410 modulated by the content data is received by the car navigation apparatus 100 and the hard disk recorder 200.
   As shown in FIG. 2, the car navigation apparatus 100 is provided with: a broadcast antenna 101; a tuner device 102; a network communication device 103; a reception buffer 104; a display speaker 105; a reproduction device 106; a GPS reception device 107; a sensor device 108; a hard disk 109; an operation device 111; a CPU 112; a memory 118 and a data bus 119.
   The broadcast antenna 101 constitutes one specific example of the "first receiving device" of the present invention together with the tuner device 102. The broadcast antenna 101 receives the airwave 410 transmitted from the broadcast station 400 as a broadcast signal, and outputs the received broadcast signal to the tuner device 102.
   The tuner device 102 constitutes one specific example of the "first receiving device" of the present invention together with the broadcast antenna 101 and performs a tuning process on the broadcast signal received on the broadcast antenna 101. By the tuning process, the broadcast signal in a frequency band corresponding to a channel of a TV program that a user desires to watch is outputted to the reproduction device 106 as the content data.
   The network communication device 103 constitutes one specific example of the "first transmitting device" and the "second receiving device" of the present invention, and performs data transmission and reception between the car navigation apparatus 100 and the hard disk recorder 200 through the communication network 300. Specifically, the network communication device 103 transmits control data generated by the control data generation device 113, to the hard disk recorder 200, and receives the content data transmitted from the hard disk recorder 200. At this time, the network communication device 103 converts the transmitted data into a communication format according to the communication network 300, and converts the received data into a format for data processing in the car navigation apparatus 100.
   The reception buffer 104 constitutes one specific example of the "buffering device" of the present invention and temporarily stores the content data transmitted from the hard disk recorder 200. The reception buffer 104 is a semiconductor memory, such as a DRAM (Dynamic Random Access Memory) and flash memory.
   The display speaker 105 is adapted to output the content data to be reproduced on the reproduction device 106, as video images and audio.
   The reproduction device 106 constitutes one specific example of the "reproducing device" of the present invention, and reproduces the content data outputted from the tuner device 102 and the content data stored in the reception buffer 104. Specifically, the reproduction device 106 performs a decoding process or the like on the content data, and converts the content data to a video signal and an audio signal. Each of the video signal and the audio signal is outputted to the display speaker 105.
   The GPS reception device 107 constitutes one specific example of the "detecting device" of the present invention. The GPS reception device 107 detects the current position of a vehicle on the basis of a GPS positioning method and provides current position information. The current position information is a latitudinal and longitudinal value which indicates the current position of a vehicle. If the current position information obtained on the basis of the GPS positioning method causes a significant error, the error in the current position information is corrected on the basis of a map matching method or self-contained navigation using the sensor device 108.
   The sensor device 108 is provided, for example, with: an acceleration sensor; an angular velocity sensor; and a velocity sensor. The sensor device 108 detects the traveling direction and traveling velocity of a vehicle, and provides travel information which indicates those.
   The hard disk 109 is a magnetic recording medium, and stores map data 110 in a long-term storage condition. Incidentally, it will be understood that not only the hard disk 109 but also an optical disc, such as a CD and DVD, and other various recording media may be used.
   The operation device 111 is provided with: a remote controller, touch panel, operation button, mouse, keyboard, and the like. The operation device 111 outputs user operation information associated with a user's operation using the operation device 111.
   The CPU 112 is connected to the tuner device 102, the network communication device 103, the reception buffer 104, the display speaker 105, the reproduction device 106, the GPS reception device 107, the sensor device 108, the hard disk 109, the operation device 111, and the memory 118, through the data bus 119. The CPU 112 instructs those constituent elements to control the entire car navigation apparatus 100. Normally, software or firmware for operating the CPU 112 is stored in the memory 118.
   More specifically, the CPU 112 is provided with: the control information generating device 113; a reproduction source switching device 114; a program analysis device 115; a route search device 116; and a candidate position prediction device 117, as its inside logical block.
   The control information generation device 113 generates control information including at least channel information which indicates a channel of a TV program that the car navigation apparatus 100 is receiving (in other words, a channel of a TV program indicated by the content data outputted to the reproduction device 106 by being tuned on the tuner device 102). The generated control information is transmitted to the hard disk recorder 200 by the operation of the network communication device 103.
   The reproduction source switching device 114 constitutes one specific example of the "switching device" of the present invention. The reproduction source switching device 114 switches between (i) reproducing the TV program (i.e. outputting it to the display speaker 105) using the broadcast signal received on the broadcast antenna device 101 and the tuner device 102 and (ii) outputting the TV program to the display speaker 105 using the content data transmitted from the hard disk recorder 200 through the communication network 300. The switching operation will be detailed later (refer to FIG. 4 etc.).
   The program analysis device 15 analyzes the content of the TV program. In particular, as described later, the program analysis device 15 has a function for extracting CM (commercial) during the TV program.
   The route search device 116 uses the map data 110 recorded in the hard disk 109 and searches for a route to a destination from the current position of the vehicle detected on the GPS reception device 107. The result of the route search (i.e. the searched route) is outputted to the display speaker 105.
   The candidate position prediction device 117 constitutes one specific example of the "predicting device" of the present invention. The candidate position prediction device 117 uses the map data 110 recorded in the hard disk 109 and predicts a position at which the vehicle will be in the future (e.g. several seconds later, several minutes later, or several hours later, or the like), on the basis of the position of the vehicle detected on the GPS reception device 107, the travel information detected on the sensor device 108, and a travel tendency in the past of the vehicle (specifically, for example, a tendency in the traveling direction, the traveling speed, and the like).
   The memory 118 includes a ROM area to store a program for performing the operation as the car navigation apparatus 100, i.e. firmware, and a RAM area to temporarily store various data used in operating as the car navigation apparatus 100.
   As shown in FIG. 3, the hard disk recorder 200 is provided with: a broadcast antenna device 201; a tuner device 202; a network communication device 203; a display speaker 205; a reproduction device 206; a recording device 207; a hard disk 209; an operation device 211; a CPU 212; a memory 218; and a data bus 219.
   The broadcast antenna 201 constitutes one specific example of the "fourth receiving device" of the present invention together with the tuner device 202. The broadcast antenna 201 receives the airwave 410 transmitted from the broadcast station 400 as a broadcast signal, and outputs the received broadcast signal to the tuner device 202.
   The tuner device 202 constitutes one specific example of the "fourth receiving device" of the present invention together with the broadcast antenna 201 and performs a tuning process on the broadcast signal received on the broadcast antenna 201. By the tuning process, the broadcast signal in a frequency band corresponding to a channel of a TV program to be recorded onto the hard disk 209 is outputted to the reproduction device 206 and the recording device 207 as the content data.
   The network communication device 203 constitutes one specific example of the "second transmitting device" and the "third receiving device" of the present invention, and performs data transmission and reception between the car navigation apparatus 100 and the hard disk recorder 200 through the communication network 300. Specifically, the network communication device 203 receives control data generated by the control data generation device 113, and transmits the content data recorded on the hard disk 109 by the operation of the recording device 206, to the car navigation apparatus 100 through the communication network 300. At this time, the network communication device 203 converts the transmitted data into a communication format according to the communication network 300, and converts the received data into a format for data processing in the car navigation apparatus 100.
   The display speaker 205 is adapted to output the content data to be reproduced on the reproduction device 206, as video images and audio.
   The reproduction device 206 reproduces the content data outputted from the tuner device 202. Specifically, the reproduction device 206 performs a decoding process or the like on the content data, and converts the content data to a video signal and an audio signal. Each of the video signal and the audio signal is outputted to the display speaker 205.
   The recording device 207 records the content data outputted from the tuner device 202, onto the hard disk 209.
   The hard disk 209 is a magnetic recording medium, and stores the content data recorded by the operation of the recording device 207, in a long-term storage condition. Incidentally, it will be understood that not only the hard disk 109 but also an optical disc, such as a CD and DVD, and other various recording media may be used.
   The operation device 211 is provided with: a remote controller, touch panel, operation button, mouse, keyboard, and the like. The operation device 211 outputs user operation information associated with a user's operation using the operation device 211.
   The CPU 212 is connected to the tuner device 202, the network communication device 203, the display speaker 205, the reproduction device 206, the recording device 207, the hard disk 209, the operation device 211, and the memory 218, through the data bus 219. The CPU 212 instructs those constituent elements to control the entire hard disk recorder 200. Normally, software or firmware for operating the CPU 212 is stored in the memory 218.
   The memory 218 includes a ROM area to store a program for performing the operation as the hard disk recorder 200, i.e. firmware, and a RAM area to temporarily store various data used in operating as the hard disk recorder 200.
(2) First operation example
   Next, with reference to FIG. 4, an explanation will be given on a first operation example of the reproducing system 1 in the embodiment. FIG. 4 is a flowchart conceptually showing a flow of the first operation example of the reproducing system 1 in the embodiment.
   As shown in FIG. 4, firstly, on the basis of the user operation information outputted in response to the user's operation using the operation device 111, a channel of a TV program to be received is selected (step S101).
   The tuner device 102 performs the tuning process in accordance with the selected channel, by which the broadcast signal in the frequency band corresponding to the selected channel is outputted to the reproduction device 106 as the content data. Then, by the operation of the reproduction device 106, the decoding process or the like is performed on the content data outputted from the tuner device 102, by which the TV program on the selected channel is outputted to the display speaker 105 (step S102). That is, the TV program is reproduced using the content data received on the broadcast antenna 101 and the tuner device 102. Here, the reproduction source switching device 114 controls the reproduction device 116 so as to reproduce the TV program using the content data received on the broadcast antenna 101 and the tuner device 102.
   At this time, in accordance with the user's starting to watch the TV program using the car navigation apparatus 100 (in other words, the TV program starting to be reproduced on the car navigation apparatus 100), the control information generation device 113 may generate the control information including a start command to start the hard disk recorder 200. The generated control information is transmitted from the car navigation apparatus 100 to the hard disk recorder 200, by the operations of the network communication devices 103 and 203. The hard disk recorder 200 that has received the control information including the start command sets the power of the hard disk recorder 200 in an ON status (or start completion status).
   Incidentally, at this time, it is preferable to set the power of the hard disk recorder 200 in the ON status, by confirming the status of the hard disk recorder 200 and transmitting the control information selectively when the hard disk recorder 200 is in a standby status. As a method of confirming the status of the hard disk recorder 200, two methods can be listed as its specific example.
   As the first method, there is listed a method of transmitting the control information, including a command to request a response from the hard disk recorder 200, from the car navigation apparatus 100 to the hard disk recorder 200. If there is no response from the hard disk recorder 200 within a certain time, it can be recognized that the hard disk recorder 200 is in the standby status. On the other hand, if there is a response from the hard disk recorder 200 within the certain time, it can be recognized that the hard disk recorder 200 is in the ON status.
   As the second method, there is listed a method of establishing a connection through the communication network 300 between the car navigation apparatus 100 and the hard disk recorder 200 (in other words, effectively starting the communication network devices 103 and 203) and transmitting the control information including a command to confirm the status of the hard disk recorder 200, from the car navigation apparatus 100, using the connection. With respect to the control information, the hard disk recorder 200 transmits information indicating its own status (or information indicating some response) to the car navigation apparatus 100.
   Then, under the control of the CPU 112, which constitutes one specific example of the "second calculating device" of the present invention, it is judged whether or not an operation of selecting a channel different from the channel selected in the step S101 is not performed by the user for a predetermined time or more (e.g. several seconds, several tens seconds, or several minutes or more) (step S103).
   As a result of the judgment in the step S103, if it is judged that the operation of selecting the different channel is performed by the user for the predetermined time or more (the step S103: No), the operational flow returns to the step S102. The tuner device 102 performs the tuning process and the reproduction device 106 performs the decoding process in accordance with the newly selected channel, by which a TV program on the newly selected channel is outputted to the display speaker 105.
   On the other hand, as a result of the judgment in the step S103, if it is judged that the operation of selecting the different channel is not performed by the user for the predetermined time or more (the step S103: Yes), then the control information is generated by the operation of the control information generation device 113 (step S104).
   Then, by the operations of the network communication devices 103 and 203, the connection between the car navigation apparatus 100 and the hard disk recorder 200 is established on the communication network 300 (step S105).
   Then, the control information generated in the step S104 is transmitted from the car navigation apparatus 100 to the hard disk recorder 200, using the connection established in the step S105.
   As described above, the operations from the step S101 to the step S106 are performed mainly on the car navigation apparatus 100 side.
   Then, the control information transmitted in the step S106 is received on the hard disk recorder 200 side by the operation of the network communication device 203 side (step S107). By analyzing the received control information, the hard disk recorder 200 can recognize the channel of the TV program that the car navigation apparatus 100 is receiving.
   Then, the tuner device 202 performs the tuning process in accordance with the channel indicated by the control information, by which the broadcast signal in the frequency band according to the channel indicated by the control information is outputted to the recording device 207. Then, by the operation of the recording device 207, the content data outputted from the tuner device 202 is recorded onto the hard disk 209 (step S108). That is, the TV program on the channel selected in the step S101 (i.e. the TV program outputted on the car navigation apparatus 100) is recorded onto the hard disk 209 on the hard disk recorder 200 side.
   At this time, the TV program on the selected channel may be outputted to the display speaker 205 by that the decoding process or the like is performed on the content data outputted from the tuner device 202 by the operation of the reproduction device 206.
   Then, under the control of the CPU 212, which constitutes one specific example of the "first calculating device" of the present invention, it is judged whether or not a predetermined time length (e.g. several seconds, several tens seconds, or several minutes) or more has elapsed since the recording of the content data is started by the recording device 207 (step S109).
   As a result of the judgment in the step S109, if it is judged that the predetermined time length or more has elapsed since the recording of the content data is started by the recording device 207 (the step S109: Yes), the operational flow goes to a step S111.
   On the other hand, as a result of the judgment in the step S109, if it is judged that the predetermined time length or more has not elapsed since the recording of the content data is started by the recording device 207 (the step S109: No), then under the control of the CPU 212, it is judged whether or not an instruction to transmit the recorded content data from the hard disk recorder 200 to the car navigation apparatus 100 is transmitted through the communication network 300 from the car navigation apparatus 100 (step S110). The instruction to transmit the recorded content data from the hard disk recorder 200 to the car navigation apparatus 100 may be transmitted to the hard disk recorder 200 from the car navigation apparatus 100 if the user uses the operation device 111 and performs an operation to give the instruction.
   As a result of the judgment in the step S110, if it is judged that the instruction to transmit the recorded content data from the hard disk recorder 200 to the car navigation apparatus 100 is not transmitted (the step S110: No), the operational flow returns to the step S108.
   On the other hand, as a result of the judgment in the step S110, if it is judged that the instruction to transmit the recorded content data from the hard disk recorder 200 to the car navigation apparatus 100 is transmitted (the step S110: Yes), under the control of the CPU 212, the transmission of the content data recorded on the hard disk 209 is started through the communication network 300 from the hard disk 200 to the car navigation apparatus 100 (step S111). At this time, the content data recorded on the hard disk 209 is transmitted to the car navigation apparatus 100 from a data portion from which the recording is started (i.e. a head of the recorded content data).
   Incidentally, in the explanation using FIG. 4, in order to determine whether or not to start the transmission of the content data recorded on the hard disk 209, both the judgment in the step S109 and the judgment in the step S110 are performed. However, only the judgment in the step S109 may be performed, or only the judgment in the step S110 may be performed. Specifically, for example, regardless of the elapsed time after the recording of the content data is started by the recording device 207, the transmission of the content data may not be started until the instruction to transmit the recorded content data is given. Alternatively, regardless of the presence or absence of the instruction to transmit the recorded content data, the transmission of the content data may not be stared until the predetermined time has elapsed since the recording of the content data is started by the recording device 207.
   As described above, the operations from the step S107 to the step S111 are performed mainly on the car navigation apparatus 100 side.
   Then, the content data whose transmission is started in the step S111 is received on the car navigation apparatus 100 side, by the operation of the communication network device 103 (step S112).
   The content data received in the step S112 is buffered on the reception buffer 104. After the content data of a certain size is buffered on the reception buffer 104, the output of the content data buffered on the reception buffer 104 to the reproduction device 106 is started, under the control of the CPU 112. Then, the reproduction device 106 uses the content data outputted from the reception buffer 104, instead of using the content data received on the broadcast antenna 101 and the tuner device 102, to start the output of the TV program to the display speaker 105 (step S113).
   Here, the reproduction device 106 is controlled to reproduce the TV program using the content data outputted from the reception buffer 104 instead of the content data received on the broadcast antenna 101 and the tuner device 102, after the content data of a certain size is buffered on the reception buffer 104.
   Then, it is judged whether or not an operation for selecting a channel different from the channel of the TV program that is being reproduced is performed (step S114).
   As a result of the judgment in the step S114, if the operation for selecting the different channel is performed (the step S114: Yes), the operational flow returns to the step S102, and the operations from the step S102 to the step S113 are continued to the TV program on the newly selected channel.
   On the other hand, as a result of the judgment in the step S114, if the operation for selecting the different channel is not performed (the step S114: No), then it is judged whether or not to end the operation of reproducing the TV program (step S115). For example, it is judged whether or not a user uses the operation device 111 and performs an operation for ending the reproduction.
   As a result of the judgment in the step S115, if it is judged that the reproduction operation is not to be ended (the step S115: No), the operational flow returns to the step S114, and the operations in the step S114 and the step S115 are continued.
   On the other hand, as a result of the judgment in the step S115, if it is judged that the reproduction operation is to be ended (the step S115: No), the reproduction operation is ended.
   Incidentally, if the reproduction operation is ended, it is preferable to generate the control information including recording stop instruction information, which gives an instruction to stop the operation of recording the content data onto the hard disk 209 by the recording device 207, by the operation of the control information generation device 113. The generated control information is transmitted from the car navigation apparatus 100 to the hard disk recorder 200 through the communication network 300. As a result, the recording device 207 stops the recording operation on the basis of the recording stop instruction information included in the received control information.
   In the same manner, even if the operation for selecting the different channel is performed, it is preferable to generate the control information including the recording stop instruction information, which gives an instruction to stop the operation of recording the content data on the channel selected so far, together with newly selected channel information, in the step S104. As a result, the operation of recording the content data on the channel selected so far is stopped, and the operation of recording the content data on the newly selected channel is started.
   Moreover, while the operations from the step S109 to the step S113 are performed, the operation of recording the content data started in the step S108 is continued if there is no instruction to stop the recording. That is, the recording operation started in the step S108 and the operations from the step 109 to the step S113 are performed in parallel.
   In the same manner, while the operations from the step S114 to the step S115 are performed, the operation of reproducing the content data started in the step S113 is continued if there is no instruction to stop the reproduction. That is, the reproduction operation started in the step S113 and the operations from the step 114 to the step S115 are performed in parallel.
   As explained above, according to the reproducing system 1 in the embodiment, it is possible to switch between and perform the reproduction operation of reproducing the TV program with the content data received on the broadcast antenna 101 and the tuner device 102 and the reproduction operation of reproducing the TV program with the content data transmitted through the communication network 300 from the hard disk recorder 200 located at home or the like, as occasion demands.
   Thus, if the reception status of the airwave 410 deteriorates on the car navigation apparatus 100 (e.g. if the airwave 410 cannot be received or in similar cases, and specifically, if a vehicle equipped with the car navigation apparatus 100 enters a tunnel or in similar cases), it is possible to continue the operation of reproducing the TV program by using the content data transmitted through the communication network 300 from the hard disk recorder 200. That is, even if the reception status of the airwave 410 deteriorates, it is possible to receive the content data on the selected channel, through the communication network 300 different from a broadcast line. By this, even if the reception status of the airwave 410 deteriorates, the user uses the car navigation apparatus 100 an can keep watching the TV program on the channel selected on the car navigation apparatus 100.
   Moreover, the content data transmitted through the communication network 300 from the hard disk recorder 200 is outputted to the reproduction device 106 after being temporarily buffered on the reception buffer 104. The size of the buffered content data is preferably to the extent that allows the reproduction of the content data for several minutes (e.g. for two minutes or the like). By this, for example, by that the vehicle equipped with the car navigation apparatus 100 enters a tunnel or the like, even if not only the reception status of the airwave 410 but also the communication status of the communication network 300 deteriorate, it is possible to keep watching the TV program using the content data buffered on the reception buffer 140.
   Moreover, the content data on the channel selected on the car navigation apparatus 100 is recorded on the hard disk 209 on the hard disk recorder 200. Thus, even if the deterioration of the communication status of the communication network 300 causes interruption in the transmission of the content data from the hard disk recorder 200 to the car navigation apparatus, it is possible to transmit the content data recorded on the hard disk 209 again after the communication status of the communication network 300 gets better. This prevents or completely eliminates such a disadvantage that the user misses one portion of the TV program on the selected channel. For example, even if the user misses one portion of news of a news program because of the deterioration of the communication status of the communication network 300, the user can watch the missed one portion of news if the content data is transmitted again after the communication status of the communication network 300 gets better. Therefore, the user can preferably watch the TV program on the desired channel.
   As described above, according to the reproducing system 1 in the embodiment, even if the TV program is watched using the car navigation apparatus 100 mounted on the movable body, such as a vehicle, it is possible to realize a good watching environment in which the TV program cannot be missed as much as possible.
   Incidentally, in the embodiment described above, if the operation for selecting the different channel is not performed for the predetermined time or more, the control information is generated and transmitted to the hard disk recorder 200. By this, when so-called zapping to change the channel frequently is performed, it is unnecessary to sequentially generate the control information.
   Moreover, the reception status of the airwave 410 is good on the car navigation apparatus 100, it is possible to continue the operation of reproducing the TV program by receiving the airwave 410. At this time, the reception of the content data through the communication network 300 is not necessarily performed. By this, it is possible to keep watching the content data on the channel selected on the car navigation apparatus 100, while reducing a load of the communication network 300 (or reducing a communication fee).
   In addition, when the content data is transmitted and received through the communication network 300, for example, a communication format or communication protocol which ensures QoS (Quality of Service), such as TCP (Transmission Control protocol), may be used. By this, it is possible to prevent such a disadvantage that one portion of the content data is lacked when the content data is transmitted and received through the communication network 300. As a result, it is possible to realize a good watching environment in which the TV program cannot be missed as much as possible. However, the communication format or communication protocol which ensures QoS (Quality of Service) may not be used.
   Incidentally, the control information may include (i) recording start instruction information for giving an instruction to start the recording of the content data (or timing to start the recording) indicated by the channel information, (ii) recording start instruction information for giving an instruction to stop the recording of the content data (or timing to stop the recording) indicated by the channel information, and (iii) transmission instruction information for giving an instruction to transmit the recorded content data (or timing to start or stop the transmission) through the communication network 300 from the hard disk recorder 200 to the car navigation apparatus 100, on the hard disk recorder 200. If the recording start instruction information, the recording stop instruction information and the transmission instruction information are included in the control information, it is preferable to start the recording the content data, to stop the recording of the content data, to start the transmission of the content data to the car navigation apparatus 100, or to stop the transmission of the content data to the car navigation apparatus 100, on the basis of the control information.
   Incidentally, in the embodiment described above, an explanation is given on the car navigation apparatus for reproducing the TV program; however, it will be understood that even the car navigation apparatus 100 for reproducing various video images or various music except the TV program, can receive the aforementioned various benefits by employing the same structure and operation.
(3) Reproduction timing
   Next, with reference to FIG. 5 to FIG. 9, an explanation will be given on transmission timing of the content data from the hard disk recorder 200 to the car navigation apparatus 100, and reproduction timing of the received content data on the car navigation apparatus 100. FIG. 5 is a timing chart conceptually showing a first example of the transmission timing of the content data from the hard disk recorder 200 to the car navigation apparatus 100 and the reproduction timing on the car navigation apparatus 100 of the received content data. FIG. 6 is a timing chart conceptually showing a second example of the transmission timing of the content data from the hard disk recorder 200 to the car navigation apparatus 100 and the reproduction timing on the car navigation apparatus 100 of the received content data. FIG. 7 is a timing chart conceptually showing a third example of the transmission timing of the content data from the hard disk recorder 200 to the car navigation apparatus 100 and the reproduction timing on the car navigation apparatus 100 of the received content data. FIG. 8 is a timing chart conceptually showing a fourth example of the transmission timing of the content data from the hard disk recorder 200 to the car navigation apparatus 100 and the reproduction timing on the car navigation apparatus 100 of the received content data. FIG. 9 is a timing chart conceptually showing a fifth example of the transmission timing of the content data from the hard disk recorder 200 to the car navigation apparatus 100 and the reproduction timing on the car navigation apparatus 100 of the received content data.
   The first line of FIG. 5 shows the reproduction timing of TV programs when the TV programs are reproduced using the airwave 410 received on the broadcast antenna 101 and the tuner device 102. This reproduction timing is substantially the same as timing in which the TV programs are broadcasted from broadcast station 400. Moreover, this reproduction timing is substantially the same as timing in which the content data is recorded onto the hard disk recorder 200.
   The second line of FIG. 5 shows the transmission timing of the content data through the communication network 300 from the hard disk recorder 200 to the car navigation apparatus 100. The transmission of the content data is started after the predetermined time or more has elapsed since the recording of the content data is started on the hard disk recorder 200 (refer to the step S109 in FIG. 4). Alternatively, if the communication status of the communication network 300 is bad, the transmission of the content data may be started after a time has elapsed in which the deterioration of the communication status can be fully avoided. Thus, the transmission timing of the content data through the communication network 300 from the hard disk recorder 200 to the car navigation apparatus 100 has a slight delay, compared to the reproduction timing of the TV programs when the TV programs are reproduced using the airwave 410 received on the broadcast antenna 101 and the tuner device 102.
   Incidentally, even if the instruction is given to transmit the recorded content data from the hard disk recorder 200 to the car navigation apparatus 100, the transmission of the content data may be started through the communication network 300 from the hard disk recorder 200 to the car navigation apparatus 100, as described above (refer to the step S110 in FIG. 4).
   The third line of FIG. 5 shows the reproduction timing of TV programs when the TV programs are reproduced using the content data transmitted through the communication network 300. On the car navigation apparatus 100, the reproduction is started after the content data equal to or larger than a predetermined size is buffered on the reception buffer 104. Thus, the reproduction timing of the TV programs when the TV programs are reproduced using the content data transmitted through the communication network 300 has a slight delay, compared to the transmission timing of the content data through the communication network 300 from the hard disk recorder 200 to the car navigation apparatus 100.
   As a result, the reproduction timing of the TV programs when the TV programs are reproduced using the content data transmitted through the communication network 300 has a slight delay, compared to the reproduction timing of the TV programs when the TV programs are reproduced using the airwave 410 received on the broadcast antenna 101 and the tuner device 102. That is, so-called time-shift reproduction (in other words, chasing playback) is performed when the TV programs are reproduced using the content data transmitted through the communication network 300.
   At this time, due to a shift in the reproduction timing, a partially overlapping program is outputted to the display speaker 105. Specifically, after an opening portion of a program A is broadcasted using the airwave 410 received on the broadcast antenna 101 and the tuner device 102, the opening portion of the program A is overlappingly outputted using the content data transmitted through the communication network 300.
   As described above, as shown in FIG. 5, if merely starting the reproduction of the TV program using the content data transmitted through the communication network 300 after the content data equal to or larger than a predetermined size is buffered on the reception buffer 104, that likely causes video images and audio outputted to the display speaker 105 to be switched over suddenly or unnaturally.
   Thus, as shown in FIG. 6, it is preferable to switch over from the reproduction operation of the TV program using the broadcast signal received on the broadcast antenna 101 and the tuner device 102 to the reproduction operation of the TV program using the content data transmitted from the hard disk recorder 200 through the communication network 300, when CM included in the TV program is reproduced. In this case, until the reproduction of the TV program using the content data transmitted through the communication network 300 is started (i.e. until the timing in which CM is reproduced), the content data transmitted through the communication network 300 is preferably buffered on the reception buffer 104. With regard to the content data of a size beyond the buffering capacity of the reception buffer 104, it is preferably discarded in a FIFO (First In First Out) method or the like.
   At this time, the program analysis device 115 needs to recognize which portion in the TV program to be reproduced is CM. Specifically, if identification data indicating to be CM is included in the content data, the identification data is preferably detected to recognize which portion in the TV program to be reproduced is CM. Moreover, it may be recognized which portion in the TV program to be reproduced is CM, by considering that CM is substantially stereo audio and that the program is substantially monaural audio.
   On the other hand, instead of the car navigation apparatus 100, if the hard disk recorder 200 is provided with the program analysis device 115, it may be recognized which portion in the TV program to be reproduced is CM, on the hard disk recorder 200 side. That is, timing to switch over the reproduction operation may be controlled (in other words, the operation of the program analysis device 115 may be controlled), on the hard disk recorder 200 side. In this case, as shown in FIG. 7, the transmission of the content data through the communication network 300 may be started in timing in which CM is reproduced. In particular, it is preferable to start the transmission of the content data, from the data portion of CM. Moreover, it is preferable to start the reproduction of CM (e.g. CM1) to be reproduced by the reproduction operation of the TV program using the content data transmitted from the hard disk recorder 200 through the communication network 300, in timing to end CM (e.g. CM1) reproduced by the reproduction operation of the TV program using the broadcast signal received on the broadcast antenna 101 and the tuner device 102.
   By this, it is possible to exclude such a disadvantage that the video images and audio outputted to the display speaker 105 are switched over suddenly or unnaturally, as much as possible.
   Incidentally, the content data recorded on the hard disk 209 may not be transmitted to the car navigation apparatus 100 from the data portion from which the recording is started (i.e. the head of the recorded content data). For example, as shown in FIG. 8, even if the content data is recorded onto the hard disk 209 from the head of a program A1, the transmission of the content data may be started from the middle of the program A1. In other words, the transmission may be started from an arbitrary data portion of the content data recorded on the hard disk 209
   As shown in FIG. 9, on the hard disk recorder 200, the transmission of the content data may be stared before the predetermined time has elapsed since the recording of the content data is started. For example, the transmission of the content data may be started simultaneously with staring the recording of the content data. In the same manner, on the car navigation apparatus 100, the reproduction of the content data transmitted through the communication network 300 may be started before the content data equal to or larger than a predetermined size is buffered on the reception buffer 104. For example, simultaneously with the transmission of the content data through the communication network 300, the transmitted content data may be reproduced. By this, ideally, it is possible to reduce a time delay between the reproduction timing of the TV programs when the TV programs are reproduced using the content data transmitted through the communication network 300 and the reproduction timing of the TV programs when the TV programs are reproduced using the airwave 410 received on the broadcast antenna 101 and the tuner device 102, as much as possible. Specifically, for example, if a delay time caused by data processing inside the hard disk recorder 200 associated with the recording and transmission of the content data, a delay time in the communication network 300 associated with the transmission of the content data, and a delay time caused by data processing inside the car navigation apparatus 100 associated with the reception and reproduction of the content data are relatively small enough to be ignored, it is possible to reduce the time delay between the reproduction timing of the TV programs when the TV programs are reproduced using the content data transmitted through the communication network 300 and the reproduction timing of the TV programs when the TV programs are reproduced using the airwave 410 received on the broadcast antenna 101 and the tuner device 102, as much as possible.
(4) Second operation example
   Next, with reference to FIG. 10 to FIG. 12, an explanation will be given on a second operation example of the reproducing system 1 in the embodiment. FIG. 10 is a flowchart conceptually showing a flow of the second operation example of the reproducing system 1 in the embodiment. FIG. 11 is a timing chart conceptually showing a sixth example of the transmission timing of the content data from the hard disk recorder 200 to the car navigation apparatus 100 and the reproduction timing on the car navigation apparatus 100 of the received content data. FIG. 12 is a flowchart conceptually showing another flow of the second operation example of the reproducing system 1 in the embodiment.

Incidentally, the same structures and operations in the explanation in FIG. 1 to FIG. 9 have the same numerical references and step numbers, and the detailed explanation thereof will be omitted.

As shown in FIG. 10, even in the second operation example, the operations from the step S101 to the step S108 are performed, as in the first operation exampled described above.

In the second operation example, in particular, after the recording of the content data onto the hard disk 209 is started by the operation of the recording device 207, the current position of the vehicle equipped with the car navigation apparatus 100 is detected by the operation of the GPS reception device 107 (step S201). As a result, the current position information indicating the detected current position is outputted from the GPS reception device 107 to the candidate position prediction device 117.

Then, by the operation of the candidate position prediction device 117, a position (hereinafter referred to as a "candidate position" as occasion demands) at which the vehicle will be in the future (e.g. several seconds later, several minutes later, or several hours later, or the like) is predicted on the basis of the position of the vehicle detected on the GPS reception device 107, the travel information detected on the sensor device 108, and a travel tendency in the past of the vehicle (specifically, for example, a tendency in the traveling direction, the traveling speed, and the like) (step S202). Here, a plurality of candidate positions are preferably predicted; however, one candidate position may be predicted.

Then, by the operation of the CPU 112, which constitutes one specific example of the "judging device" of the present invention, it is judged whether or not an obstacle occurs in which the airwave 410 cannot be received using the broadcast antenna 101, in at least one of the candidate positions predicted in the step S202 (step S203). In other words, it is judged whether or not the reception status of the airwave 410 on the car navigation apparatus 100 deteriorates in at least one of the candidate positions predicted in the step S202. For example, if at least one of the candidate positions is in a tunnel, underground, in a building, or in downtown with many skyscrapers, it may be judged that the obstacle occurs. On the other hand, if each off the candidate positions is in an open place, it may be judged that the obstacle does not occur.

At this time, the aforementioned judgment may be performed on the basis of airwave reception materials recorded in advance in the hard disk 109. The airwave reception materials are helpful to specify the communication environments of a plurality of positions on the globe. The airwave reception materials are recorded on the hard disk 109 as digital data. Ideally, the airwave reception materials are preferably materials to specify the reception status of the airwave 410 all over the places within a range of humans' activities, such as on the ground, under the ground, on the sea, under the sea, or in the air. However, the airwave reception materials may be materials to specify the reception status of the airwave 410 on the ground or under the ground, in Asia, in Japan, in Tokyo or the like.

Specifically, the airwave reception materials are data of describing in advance the evaluation of the good or bad reception status of the airwave 410 in a plurality of positions on the globe. For example, the aboveground and underground in Japan are divided into 100-meter square areas. Then, the geomorphic characteristics or geographic features of each area are analyzed, or an investigation is carried out in each area after actually going there, to thereby evaluate the good or bad reception status of the airwave 410 in each area. Then, the data in which the evaluation result is recorded for each area is prepared. Such data is used as the airwave reception materials. Incidentally, the size of the divided area is not limited to the 100-meter square, but it can be determined, as occasion demands, depending on an aspect of the travel of the car navigation apparatus 100 (by the vehicle or on foot), or a required prediction accuracy. Moreover, there may be two evaluation levels of the reception status of the airwave 410, like "good" and "bad", or five levels like "extremely good", "good", "average", "bad", and "extremely bad".

Moreover, the airwave reception materials may be data of describing in advance the geomorphic characteristics or geographic features in a plurality of places on the globe. For example, the airwave reception materials may be data indicating each of areas obtained by dividing the aboveground and underground in Japan into 100-meter square areas is on the ground, under the ground, between buildings, in an arcade, in a tunnel, under the elevated, above a mountain, or on the flatland. For example, if a certain area is on the ground, above a mountain, or on the flatland, the reception status of the airwave 410 is good. On the other hand, if the area is between buildings, in an arcade, under the elevated, or in a tunnel, the reception status of the airwave 410 is bad. As described above, if the geomorphic characteristics or geographic features in a certain area can be known, it is possible to specify the reception status of the airwave 410 in a position in the area.

Moreover, the airwave reception materials may be map information. On a map, there are recorded positions of roads on the ground, positions of underground roads, positions of arcades, and positions of tunnels. Therefore, with reference to the map information, it is possible to know if a certain position is on a road on the ground, in a tunnel, or the like. Then, if the position is on an open road on the ground, the reception status of the airwave 410 is good. On the other hand, if the position is in a tunnel, the reception status of the airwave 410 is bad. As described above, with reference to the map information, it is possible to specify the reception status of the airwave 410 in a certain position.

As a result of the judgment in the step S203, if it is judged that the obstacle does not occur in each of the candidate positions predicted (in other words, the reception status of the airwave 410 does not deteriorate) (the step S203: No), the operational flow returns to the step S201, and the operations from the step S201 to the step S203 are repeated.

On the other hand, as a result of the judgment in the step S203, if it is judged that the obstacle possibly occurs in at least one of the candidate positions predicted (in other words, the reception status of the airwave 410 possibly deteriorates) (the step S203: Yes), the transmission instruction information which gives an instruction to start the transmission of the content data recorded on the hard disk 209 is transmitted from the car navigation apparatus 100 to the hard disk recorder 200 (step S204).

The transmission instruction information transmitted in the step S204 is received on the hard disk recorder 200, and the transmission of the content data recorded on the hard disk 209 is started from the hard disk recorder 200 to the car navigation apparatus 100 (the step S111).

Then, on the car navigation apparatus 100 side, the operations from the step S112 to the step S115 are performed as in the first operation example.

The timing of various operations in FIG. 10 is shown in the timing chart in FIG. 11. As shown in FIG. 11, firstly, the TV program is reproduced using the airwave 410 received on the broadcast antenna 101 and the tuner device 102.

Then, if it is judged that the obstacle possibly occurs in at least one of the candidate positions predicted, the transmission instruction information, which gives an instruction to transmit the content data, is transmitted from the car navigation apparatus 100 to the hard disk recorder 200. By this, the transmission of the content data is started through the communication network 300 from the hard disk recorder 200 to the car navigation apparatus 100.

Then, on the car navigation apparatus 100 side, after the content data of a certain size is buffered on the reception buffer 104, the reproduction operation of the TV program using the airwave 410 received on the broadcast antenna 101 and the tuner device 102 is shifted over to the reproduction operation of the TV program using the content data transmitted through the communication network 300.

By this, even in the second operation example, it is possible to receive the same various benefits as those received in the first operation example.

In particular, in the second operation example, the GPS is used to judge in advance whether or not the reception status of the airwave 410 deteriorates. Thus, it is possible to transmit the content data from the hard disk recorder 200 to the car navigation apparatus 100 in preferable timing in which such a situation that the TV program cannot be watched on the car navigation apparatus 100 does not occur.

Incidentally, in the second operation example shown in FIG. 11, if it is judged that the reception status of the airwave 410 possibly deteriorates in the candidate position predicted, the instruction is transmitted to start the transmission of the content data from the hard disk recorder 200 to the car navigation apparatus 100. However, as shown in FIG. 12, if it is judged that the reception status of the airwave 410 possibly deteriorates in the candidate position predicted, an instruction may be transmitted to start the recording of the content data on the hard disk recorder 200.

Moreover, in the embodiment described above, an explanation is mainly given on the operation of switching over from the reproduction operation of the TV program using the broadcast signal received on the broadcast antenna 101 and the tuner device 102 to the reproduction operation of the TV program using the content data transmitted from the hard disk recorder 200 through the communication network 300.

On the other hand, switching over from the reproduction operation of the TV program using the content data transmitted from the hard disk recorder 200 through the communication network 300 to the reproduction operation of the TV program using the broadcast signal received on the broadcast antenna 101 and the tuner device 102 may be performed, for example, if the communication status of the communication network 300 deteriorates, or if the reception status of the airwave 410 is good on the car navigation apparatus 100.

The present invention is not limited to the aforementioned embodiment, but various changes may be made, if desired, without departing from the essence or spirit of the invention which can be read from the claims and the entire specification. A reproducing system, a reproducing method, a mobile reproducing apparatus, a recording apparatus, and a computer program, all of which involve such changes, are also intended to be within the technical scope of the present invention.

### Industrial Applicability

The reproducing system, the reproducing method, the mobile reproducing apparatus, the recording apparatus, and the computer program according to the present invention can be applied to a reproducing system and reproducing method in which communication is performed between a mobile reproducing apparatus and a recording apparatus connected mainly through a mobile wireless network, in which information is transferred from the recording apparatus to the mobile reproducing apparatus and in which the information can be reproduced on the mobile reproducing apparatus, as well as the mobile reproducing apparatus and the recording apparatus used for the reproducing system. Moreover, they can be applied to a reproducing system, a mobile reproducing apparatus, a recording apparatus or the like, which are mounted on various computer equipment for consumer use or for commercial use, or which can be connected to various computer equipment.

## Claims

1. A reproducing system comprising: a mobile reproducing apparatus for receiving and reproducing content data on a plurality of channels broadcasted from a broadcast station through a broadcast line; and a recording apparatus for receiving and recording the content data on the plurality of channels broadcasted from the broadcast station through the broadcast line,
said mobile reproducing apparatus comprising:
a first receiving device for receiving the content data on the desired channel of the content data on the plurality of channels broadcasted through the broadcast line;
a first transmitting device for transmitting control information, which is necessary for said recording apparatus to transmit the content data on the desired channel to said mobile reproducing apparatus, to said recording apparatus through a communication line;
a second receiving device for receiving the content data on the desired channel transmitted from said recording apparatus through the communication line;
a reproducing device for reproducing the content data on the desired channel received by at least one of said first receiving device and said second receiving device; and
a controlling device for controlling said reproducing device to switch between (i) a first reproduction operation of reproducing the content data on the desired channel received by said first receiving device and (ii) a second reproduction operation of reproducing the content data on the desired channel received by said second receiving device,
said recording apparatus comprising:
a third receiving device for receiving the control information transmitted from said mobile reproducing apparatus through the communication line;
a fourth receiving device for receiving the content data on the plurality of channels broadcasted through the broadcast line;
a recording device for recording the content data on the desired channel of the content data on the plurality of channels received by said fourth receiving device, on the basis of the control information; and
a second transmitting device for transmitting the content data on the desired channel recorded by said recording device, to said mobile reproducing apparatus through the communication line.

2. The reproducing system according to claim 1, wherein said controlling device controls said reproducing device to switch over to the second reproduction operation if the content data on the desired channel is received by said second receiving device.

3. The reproducing system according to claim 1, wherein said controlling device controls said reproducing device to switch over to the second reproduction operation after said reproducing device comes to be able to reproduce the content data on the desired channel received by said second receiving device.

4. The reproducing system according to claim 1, wherein
said mobile reproducing apparatus further comprises a buffering device for temporarily storing the content data on the desired channel transmitted from said recording apparatus through the communication line, and
said controlling device controls said reproducing device to switch over to the second reproduction operation after the content data on the desired channel equal to or larger than a predetermined size received by said second receiving device is stored on said buffering device.

5. The reproducing system according to claim 1, wherein
at least one of the content data on the plurality of channels includes commercial data discretely or periodically distributed along a reproduction time axis of the content data, and
said controlling device controls said reproducing device to switch over to the second reproduction operation and start the reproduction from the commercial data while the commercial data is reproduced by the first reproduction operation.

6. The reproducing system according to claim 1, wherein
said recording apparatus further comprises a first calculating device for calculating an elapsed time after the recording of the content data on the desired channel is started by said recording device, and
said second transmitting device starts the transmission of the content data on the desired channel recorded by said recording device, after the elapsed time calculated by said first calculating device exceeds a predetermined first threshold value.

7. The reproducing system according to claim 1, wherein
said mobile reproducing apparatus further comprises:
a detecting device for detecting a current position of said mobile reproducing apparatus;
a predicting device for predicting a plurality of candidate positions to which said mobile reproducing apparatus likely travels in a future, on the basis of the current position detected by said detecting device and map information; and
a judging device for judging whether or not said first receiving device can receive the content data on the desired channel broadcasted through the broadcast line, in each of the plurality of candidate positions, and
said second transmitting device starts the transmission of the content data on the desired channel recorded by said recording device if it is judged by said judging device that the first receiving device cannot receive the content data on the desired channel broadcasted through the broadcast line.

8. The reproducing system according to claim 1, wherein
at least one of the content data on the plurality of channels includes commercial data discretely or periodically distributed along a reproduction time axis of the content data, and
said second transmitting device starts the transmission of the content data on the desired channel recorded by said recording device, using the commercial data recorded by said recording device as a start point, after the commercial data is recorded by said recording device.

9. The reproducing system according to claim 8, wherein
said second transmitting device starts the transmission of the content data on the desired channel recorded by said recording device, using the commercial data recorded by said recording device as a start point, while the commercial data is reproduced by the first reproduction operation, and
said controlling device controls said reproducing device to switch over to the second reproduction operation and start the reproduction from the commercial data, while the commercial data is reproduced by the first reproduction operation.

10. The reproducing system according to claim 1, wherein
said mobile reproducing apparatus further comprises a second calculating device for calculating an elapsed time after channel selection is performed on the content data on the plurality of channels, and
said first transmitting device transmits the control information after the elapsed time calculated by said second calculating device exceeds a predetermined second threshold value.

11. The reproducing system according to claim 1, wherein
said mobile reproducing apparatus further comprises:
a detecting device for detecting a current position of said mobile reproducing apparatus;
a predicting device for predicting a plurality of candidate positions to which said mobile reproducing apparatus likely travels in a future, on the basis of the current position detected by said detecting device and map information; and
a judging device for judging whether or not said first receiving device can receive the content data on the desired channel broadcasted through the broadcast line, in each of the plurality of candidate positions, and
said first transmitting device transmits the control information to said recording apparatus through the communication line if it is judged by said judging device that the first receiving device cannot receive the content data on the desired channel broadcasted through the broadcast line.

12. The reproducing system according to claim 1, wherein said mobile reproducing apparatus further comprises a buffering device for temporarily storing the content data on the desired channel transmitted from said recording apparatus through the communication line.

13. A reproducing system comprising: a mobile reproducing apparatus for receiving and reproducing content data on a plurality of channels broadcasted from a broadcast station through a broadcast line; and a recording apparatus for storing the content data on the plurality of channels broadcasted from the broadcast station through the broadcast line,
said mobile reproducing apparatus comprising:
a first receiving device for receiving the content data on the desired channel of the content data on the plurality of channels broadcasted through the broadcast line;
a first transmitting device for transmitting control information, which is necessary for said recording apparatus to transmit the content data on the desired channel to said mobile reproducing apparatus, to said recording apparatus through a communication line;
a second receiving device for receiving the content data on the desired channel transmitted from said recording apparatus through the communication line;
a reproducing device for reproducing the content data on the desired channel received by at least one of said first receiving device and said second receiving device; and
a controlling device for controlling said reproducing device to switch between (i) a first reproduction operation of reproducing the content data on the desired channel received by said first receiving device and (ii) a second reproduction operation of reproducing the content data on the desired channel received by said second receiving device,
said recording apparatus comprising:
a third receiving device for receiving the control information transmitted from said mobile reproducing apparatus through the communication line;
a storing device for storing the content data on the plurality of channels broadcasted through the broadcast line; and
a second transmitting device for transmitting the content data on the desired channel stored by said storing device, to said mobile reproducing apparatus through the communication line.

14. A reproducing method in a reproducing system comprising: a mobile reproducing apparatus for receiving and reproducing content data on a plurality of channels broadcasted from a broadcast station through a broadcast line; and a recording apparatus for receiving and recording the content data on the plurality of channels broadcasted from the broadcast station through the broadcast line,
said reproducing method comprising:
a first receiving process of receiving the content data on the desired channel of the content data on the plurality of channels broadcasted through the broadcast line, on said mobile reproducing apparatus;
a first transmitting process of transmitting control information, which is necessary for said recording apparatus to transmit the content data on the desired channel to said mobile reproducing apparatus, to said recording apparatus through a communication line;
a second receiving process of receiving the content data on the desired channel transmitted from said recording apparatus through the communication line;
a reproducing process of reproducing the content data on the desired channel received by at least one of said first receiving process and said second receiving process; and
a controlling process of switching between (i) a first reproduction operation of reproducing the content data on the desired channel received by said first receiving device and (ii) a second reproduction operation of reproducing the content data on the desired channel received by said second receiving device;
a third receiving process of receiving the control information transmitted from said mobile reproducing apparatus through the communication line;
a fourth receiving process of receiving the content data on the plurality of channels broadcasted through the broadcast line, on the recording device;
a recording process of recording the content data on the desired channel of the content data on the plurality of channels received by said third receiving process, on the basis of the control information; and
a second transmitting process of transmitting the content data on the desired channel recorded by said recording process, to said mobile reproducing apparatus through the communication line.

15. A reproducing method in a reproducing system comprising: a mobile reproducing apparatus for receiving and reproducing content data on a plurality of channels broadcasted from a broadcast station through a broadcast line; and a recording apparatus for storing the content data on the plurality of channels broadcasted from the broadcast station through the broadcast line,
said reproducing method comprising:
a first receiving process of receiving the content data on the desired channel of the content data on the plurality of channels broadcasted through the broadcast line;
a first transmitting process of transmitting control information, which is necessary for said recording apparatus to transmit the content data on the desired channel to said mobile reproducing apparatus, to said recording apparatus through a communication line;
a second receiving process of receiving the content data on the desired channel transmitted from said recording apparatus through the communication line;
a reproducing process of reproducing the content data on the desired channel received by at least one of said first receiving process and said second receiving process; and
a controlling process of switching between (i) a first reproduction operation of reproducing the content data on the desired channel received by said first receiving device and (ii) a second reproduction operation of reproducing the content data on the desired channel received by said second receiving device,
a third receiving process of receiving the control information transmitted from said mobile reproducing apparatus through the communication line; and
a second transmitting process of transmitting the content data on the desired channel stored by said recording apparatus, to said mobile reproducing apparatus through the communication line.

16. A mobile reproducing apparatus for receiving content data on a plurality of channels broadcasted from a broadcast station through a broadcast line, said mobile reproducing apparatus comprising:
a first receiving device for receiving the content data on the desired channel of the content data on the plurality of channels broadcasted through the broadcast line;
a first transmitting device for transmitting control information, which is necessary for a recording apparatus to transmit the content data on the desired channel to said mobile reproducing apparatus, to said recording apparatus through a communication line;
a second receiving device for receiving the content data on the desired channel transmitted from said recording apparatus through the communication line;
a reproducing device for reproducing the content data on the desired channel received by at least one of said first receiving device and said second receiving device; and
a controlling device for controlling said reproducing device to switch between (i) a first reproduction operation of reproducing the content data on the desired channel received by said first receiving device and (ii) a second reproduction operation of reproducing the content data on the desired channel received by said second receiving device.

17. A recording apparatus for receiving and recording content data on a plurality of channels broadcasted from a broadcast station through a broadcast line, said recording apparatus comprising:
a third receiving device for receiving control information, which is transmitted from a mobile reproducing apparatus through a communication line and which is necessary for said recording apparatus to transmit the content data on the desired channel of the content data on the plurality of channels to said mobile reproducing apparatus;
a fourth receiving device for receiving the content data on the plurality of channels broadcasted through the broadcast line;
a recording device for recording the content data on the desired channel of the content data on the plurality of channels received by said fourth receiving device, on the basis of the control information; and
a second transmitting device for transmitting the content data on the desired channel recorded by said recording device, to said mobile reproducing apparatus through the communication line.

18. A recording apparatus for storing content data on a plurality of channels broadcasted from a broadcast station through a broadcast line, said recording apparatus comprising:
a third receiving device for receiving control information, which is transmitted from a mobile reproducing apparatus through a communication line and which is necessary for said recording apparatus to transmit the content data on the desired channel of the content data on the plurality of channels to said mobile reproducing apparatus;
a storing device for storing the content data on the plurality of channels broadcasted through the broadcast line; and
a second transmitting device for transmitting the content data on the desired channel stored by said storing device, to said mobile reproducing apparatus through the communication line.

19. A computer program for controlling a computer provided in a mobile reproducing apparatus for receiving content data on a plurality of channels broadcasted from a broadcast station through a broadcast line, said mobile reproducing apparatus comprising: a first receiving device for receiving the content data on the desired channel of the content data on the plurality of channels broadcasted through the broadcast line; a first transmitting device for transmitting control information, which is necessary for a recording apparatus to transmit the content data on the desired channel to said mobile reproducing apparatus, to said recording apparatus through a communication line; a second receiving device for receiving the content data on the desired channel transmitted from said recording apparatus through the communication line; a reproducing device for reproducing the content data on the desired channel received by at least one of said first receiving device and said second receiving device; and a controlling device for controlling said reproducing device to switch between (i) a first reproduction operation of reproducing the content data on the desired channel received by said first receiving device and (ii) a second reproduction operation of reproducing the content data on the desired channel received by said second receiving device,
said computer program making the computer function as at least one portion of said first receiving device, said first transmitting device, said second receiving device, said reproducing device, and said controlling device.

20. A computer program for controlling a computer provided in a recording apparatus for receiving and recording content data on a plurality of channels broadcasted from a broadcast station through a broadcast line, said recording apparatus comprising: a third receiving device for receiving control information, which is transmitted from a mobile reproducing apparatus through a communication line and which is necessary for said recording apparatus to transmit the content data on the desired channel of the content data on the plurality of channels to said mobile reproducing apparatus; a fourth receiving device for receiving the content data on the plurality of channels broadcasted through the broadcast line; a recording device for recording the content data on the desired channel of the content data on the plurality of channels received by said fourth receiving device, on the basis of the control information; and a second transmitting device for transmitting the content data on the desired channel recorded by said recording device, to said mobile reproducing apparatus through the communication line,
said computer program making the computer function as at least one portion of said third receiving device, said fourth receiving device, said recording device, and said second transmitting device.

21. A computer program for controlling a computer provided in a recording apparatus for storing content data on a plurality of channels broadcasted from a broadcast station through a broadcast line, said recording apparatus comprising: a third receiving device for receiving control information, which is transmitted from a mobile reproducing apparatus through a communication line and which is necessary for said recording apparatus to transmit the content data on the desired channel of the content data on the plurality of channels to said mobile reproducing apparatus; a storing device for storing the content data on the plurality of channels broadcasted through the broadcast line; and a second transmitting device for transmitting the content data on the desired channel stored by said storing device, to said mobile reproducing apparatus through the communication line,
said computer program making the computer function as at least one portion of said third receiving device, said storing device, and said second transmitting device.
